(19) **Europäisches Patentamt**
**European Patent Office**
**Office européen des brevets**

(11) **EP 2 757 620 A1**

(12) **EUROPEAN PATENT APPLICATION**
published in accordance with Art. 153(4) EPC

(43) Date of publication:
**23.07.2014 Bulletin 2014/30**

(21) Application number: **12832068.6**

(22) Date of filing: **13.09.2012**

(51) Int Cl.:
*H01M 4/62* (2006.01)     *H01M 4/04* (2006.01)
*H01M 4/139* (2010.01)     *H01G 9/00* (2006.01)
*H01G 11/22* (2013.01)     *H01G 13/00* (2013.01)

(86) International application number:
**PCT/JP2012/073419**

(87) International publication number:
**WO 2013/039131 (21.03.2013 Gazette 2013/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.09.2011   JP 2011201153**
**14.09.2011   JP 2011201154**
**14.09.2011   JP 2011201155**
**15.09.2011   JP 2011201320**

(71) Applicant: **Zeon Corporation**
**Tokyo 100-8246 (JP)**

(72) Inventors:
• **ISSHIKI, Yasuhiro**
**Tokyo 100-8246 (JP)**

• **FUJII, Tsutomu**
**Tokyo 100-8246 (JP)**
• **ISHII, Takuya**
**Tokyo 100-8246 (JP)**
• **MATSUMURA, Taku**
**Tokyo 100-8246 (JP)**
• **OTANI, Yuko**
**Tokyo 100-8246 (JP)**
• **SHIBATA, Yuji**
**Tokyo 100-8246 (JP)**
• **OHNISHI, Kazuyuki**
**Tokyo 100-8246 (JP)**

(74) Representative: **Vossius & Partner**
**Siebertstrasse 4**
**81675 München (DE)**

(54) **ELECTRODE FOR ELECTROCHEMICAL ELEMENT**

(57)     An electrode for electrochemical device which is provided with an electrode active material layer containing an electrode active material and a binder, cmprising binder-covered parts 220 comprised of a binder which covers at least parts of the surfaces of particles of an electrode active material 210 and binder-connecting parts 230 comprised of a binder which is present in space parts 240 formed between pluralities of particles of the electrode active material 210 and which connects the binder-covered parts 220 formed at the surfaces of the pluralities of particles of the electrode active material 210 which form the space parts can be provided.

Fig. 2

**Description**

TECHNICAL FIELD

The present invention relates to an electrode for electrochemical device.

BACKGROUD ART

Lithium ion secondary cells which are small in size, light in weight, high in energy density, and furthermore can be repeatedly charged and discharged, and other electrochemical devices are rapidly growing in demand thanks to such properties. Lithium ion secondary cells are comparatively large in energy density, so are being utilized in mobile phones and notebook type personal computers, electric vehicles, and other fields.

An electrode which forms part of such an electrochemical device is usually produced by coating a slurry which contains a binder, electrode active material, and solvent on current collector such as metal foil and removing the solvent. As the slurry which forms the electrode of this electrochemical device, an organic-based slurry which is obtained by using a binder constituted by polyvinylidene fluoride (PVDF) or another fluorine-based resin and a solvent constituted by N-methyl-pyrrolidone (NMP) or another organic solvent is generally used.

However, on the other hand, in the method of using an organic-based slurry, there is the problem of the expense which is required for recycling the organic solvent and the problem of securing safety due to the use of an organic solvent. For this reason, to solve these problems, an aqueous binder which is used for an aqueous slurry which is obtained by using water as a medium is being studied.

For example, Patent Document 1 discloses an aqueous binder which is comprised of a mixture of a polymer which has structural units derived from 1,3-butadiene, structural units derived from aromatic vinyl, and structural units derived from ethylenically unsaturated carboxylic acid ester, and poly-1,3-butadiene. Note that, in this Patent Document 1, such an aqueous binder is used and an electrode active material and water are mixed to obtain an aqueous slurry and the obtained aqueous slurry is coated on the metal foil current collector to obtain an electrode for electrochemical device

PRIOR ART DOCUMENTS

PATENT DOCUMENTS

Patent Document 1: Japanese Patent No. 3627586

SUMMARY OF THE INVENTION

PROBLEM TO BE SOLVED BY THE INVENTION

However, as the inventors studied, in the art of the above-mentioned Patent Document 1, the obtained electrode for electrochemical device had the problem that in the electrode for electrochemical device, the binder was present in a state closing the spaces which are formed between the particles of the electrode active material, so the interface between the electrode active material and the electrolytic solution is not suitably formed and therefore the ion conduction becomes insufficient and, as a result, the resistance ends up becoming higher.

The present invention has as its object to provision of an electrode for electrochemical device which is high in adhesion between the electrode active material layer and current collector, is excellent in wettability with respect to the electrolytic solution, and, when used to make a cell, gives a low internal resistance and excellent cycle characteristics.

MEANS FOR SOLVING THE PROBLEMS

The inventors engaged in in-depth research so as to achieve the above object and as a result discovered that by configuring the electrode for electrochemical device by providing binder-covered parts which are comprised of a binder which covers at least parts of the surfaces of particles of an electrode active material and binder-connecting parts which are comprised of a binder which is present in space parts formed between pluralities of particles of the electrode active material and which connects the binder-covered parts formed at the surfaces of the pluralities of particles of the electrode active material which form the space parts, it is possible to make the electrode for electrochemical device one which is high in adhesion between the electrode active material layer and current collector, excellent in wettability with respect to an electrolytic solution, and thereby, when made into a cell, gives a low internal resistance and excellent cycle characteristics, and thereby completed the present invention.

That is, according to the present invention, there is provided an electrode for electrochemical device which is provided with an electrode active material layer containing an electrode active material and a binder, comprising binder-covered parts comprised of a binder which covers at least parts of the surfaces of particles of an electrode active material and binder-connecting parts comprised of a binder which is present in space parts formed between pluralities of particles of the electrode active material and which connects the binder-covered parts formed at the surfaces of the pluralities of particles of the electrode active material which form the space parts.

In the electrode for electrochemical device of the present invention, preferably the binder-covered parts which are formed at the surfaces of the pluralities of particles of the electrode active material which form the space parts are not formed integrally but are formed independent from each other.

In the electrode for electrochemical device of the present invention, preferably the binder-connecting parts have lengths of 0.01 to 5 $\mu$m.

In the electrode for electrochemical device of the present invention, preferably the binder-connecting parts have fibrous and/or sheet shapes.

In the electrode for electrochemical device of the present invention, preferably the binder is an acrylate-based polymer and/or conjugated diene-based polymer.

In the electrode for electrochemical device of the present invention, preferably the electrode active material and the binder form composite particles.

In the electrode for electrochemical device of the present invention, preferably the electrode active material layer is obtained by pressing the composite particles by a first pressure to obtain a pressed member and pressing the pressed member by a second pressure which is higher than the first pressure.

Note that, as the method of production of an electrode for electrochemical device of the present invention explained above, for example, the following method of production may be provided:

That is, as a first method of production, there can be provided:

(1a) A method of production of an electrode for electrochemical device comprising a compressed powder layer forming step which compresses composite particles which contain an electrode active material and binder to make them deposit on a long sheet-shaped support surface and form a compressed powder layer on a long sheet-shaped support and a transfer step of not making the compressed powder layer on a long sheet-shaped support into a rolled member but transferring the compressed powder layer to a long sheet-shaped current collector,

(2a) the method of production of an electrode for electrochemical device as set forth in the above (1a) further comprising a step, simultaneous with the transfer or after the transfer, of pressing the compressed powder layer,

(3a) the method of production of an electrode for electrochemical device as set forth in the above (1a) or (2a) wherein the transfer step is performed simultaneously or sequentially on both surfaces of the sheet-shaped current collector,

(4a) the method of production of an electrode for electrochemical device as set forth in any of the above (1a) to (3a) wherein a density of the compressed powder layer after the compressed powder layer forming step is 130% to 400% of the density of the composite particles before compression,

(5a) the method of production of an electrode for electrochemical device as set forth in any of the above (1a) to (4a) wherein a recovery rate of the compressed powder layer is 100% to 5000%, and,

(6a) the method of production of an electrode for electrochemical device as set forth in any of the above (1a) to (5a) wherein the sheet-shaped support is a seamless belt.

Further, as a second method of production, there can be provided:

(1b) A method of production of an electrode for electrochemical device comprising a compressed powder layer forming step which feeds composite particles which contain an electrode active material and a binder between a pair of rolls which rotate in opposite directions and compresses the composite particles to make them deposit on one of the roll surfaces and form a compressed powder layer and a transfer step of transferring the compressed powder layer which is deposited on one of the rolls to a long sheet-shaped current collector,

(2b) the method of production of an electrode for electrochemical device as set forth in the above (1b) further comprising a step, simultaneous with the transfer or after the transfer, of pressing the compressed powder layer,

(3b) the method of production of an electrode for electrochemical device as set forth in the above (1b) or (2b) wherein the transfer step is performed simultaneously or sequentially on both surfaces of the sheet-shaped current collector,

(4b) the method of production of an electrode for electrochemical device as set forth in any of the above (1b) to (3b) wherein a roll on which the compressed powder layer is deposited is roughened on the roll surface,

(5b) the method of production of an electrode for electrochemical device as set forth in any of the above (1b) to (4b) wherein a density of the compressed powder layer which is deposited on a roll is 130% to 400% of the density of the composite particles before compression, and, (6b) the method of production of an electrode for electrochemical device as set forth in any of the above (1b) to (5b) wherein a recovery rate of the compressed powder layer is 100% to 5000%.

Alternatively, as a third method of production, there can be provided:

(1c) A method of production of an electrode for electrochemical device comprising a compressed powder layer forming step which compresses composite particles which contain an electrode active material and binder to discontinuously form a compressed powder layer on a support surface and a transfer step of transferring the compressed powder layer to a long sheet-shaped current collector to form a sheet-shaped current collector which has a discontinuous compressed powder layer in the flow direction (MD direction),
(2c) the method of production of an electrode for electrochemical device as set forth in the above (1c) wherein the support surface intermittently has parts different in properties from other parts,
(3c) the method of production of an electrode for electrochemical device as set forth in the above (1c) wherein the support surface is alternately formed with parts which are roughened and parts which are not roughened in the flow direction,
(4c) the method of production of an electrode for electrochemical device as set forth in any of the above (1c) to (3c) wherein the support is a support roll or support belt,
(5c) the method of production of an electrode for electrochemical device as set forth in any of the above (1c) to (4c) further comprising a step of pressing the sheet-shaped current collector having the compressed powder layer.

EFFECTS OF THE INVENTION

According to the present invention, it is possible to provided an electrode for electrochemical device which is high in adhesion between the electrode active material layer and current collector, is excellent in wettability with respect to the electrolytic solution, and, when used to make a cell, gives a low internal resistance and excellent cycle characteristics.

BRIEF DESCRIPTION OF DRAWINGS

[FIG. 1] FIG. 1 is a schematic view which shows one example of an electrode for electrochemical device of the present invention.
[FIG. 2] FIG. 2 is a pattern diagram which shows a microstructure of an electrode for electrochemical device of the present invention.
[FIG. 3] FIG. 3 is a pattern diagram which shows an electrode for electrochemical device according to the prior art.
[FIG. 4] FIG. 4 is a pattern diagram which shows an electrode for electrochemical device according to the prior art.
[FIG. 5] FIG. 5 is a schematic view which shows an electrode forming apparatus for producing an electrode for electrochemical device of the present invention according to a first example.
[FIG. 6] FIG. 6 is a schematic view which shows an electrode forming apparatus for producing an electrode for electrochemical device of the present invention according to a second example.
[FIG. 7] FIG. 7 is a schematic view which shows an electrode forming apparatus for producing an electrode for electrochemical device of the present invention according to a second example.
[FIG. 8] FIG. 8 is a schematic view which shows an electrode forming apparatus for producing an electrode for electrochemical device of the present invention according to a second example.
[FIG. 9] FIG. 9 is a schematic view which shows an electrode forming apparatus for producing an electrode for electrochemical device of the present invention according to a third example.
[FIG. 10] FIG. 10 is a schematic view which shows the surface conditions of the roll 43A and roll 43B of the apparatus which is shown in FIG. 9.
[FIG. 11] FIG. 11 is a schematic view which shows an electrode forming apparatus for producing an electrode for electrochemical device of the present invention according to a third example.
[FIG. 12] FIG. 12 is a schematic view which shows an electrode forming apparatus for producing an electrode for electrochemical device of the present invention according to a third example.
[FIG. 13] FIG. 13 is a schematic view which shows an electrode forming apparatus for producing an electrode for electrochemical device of the present invention according to a fourth example.
[FIG. 14] FIG. 14(a) is a schematic view of the surface of the roll 53A,
FIG. 14(b) is a side view of the roll 53A seen from the axial direction, and FIG. 14(c) is a schematic view which shows a discontinuous compressed powder layer 400 which is formed in the fourth example.

[FIG. 15] FIG. 15 is a schematic view which shows an electrode forming apparatus for producing an electrode for electrochemical device of the present invention according to a fourth example.

[FIG. 16] FIG. 16 is a schematic view which shows an electrode forming apparatus for producing an electrode for electrochemical device of the present invention according to a fourth example.

DESCRIPTION OF EMBODIMENTS

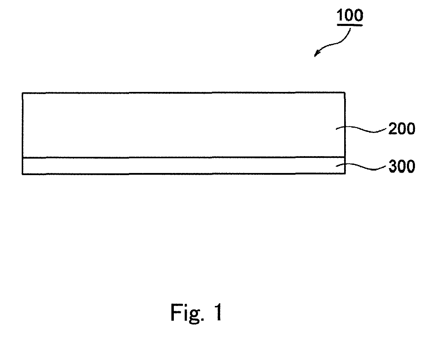

Below, embodiments of the present invention will be explained based on the drawings. FIG. 1 is a schematic view which shows one example of an electrode for electrochemical device of the present invention. As shown in FIG. 1, an electrode for electrochemical device 100 of the present invention is comprised of a sheet-shaped current collector 300 on which a sheet-shaped or film-shaped electrode active material layer 200 is formed. The electrode for electrochemical device 100 is not particularly limited so long as an electrode which is used for an electrochemical device, but, for example, an electrode for a lithium ion secondary cell, electric double-layer capacitor, hybrid capacitor (lithium ion capacitor etc.), and other various electrochemical devices may be mentioned.

The electrode active material layer 200 which forms the electrode for electrochemical device 100 of the present invention contains at least an electrode active material and a binder. Below, the electrode active material and binder which form the electrode active material layer 200 will be explained.

(Electrode active material)

The electrode active material used in the present invention is suitably selected by the type of the electrochemical device. For example, when using the electrode for electrochemical device 100 of the present invention as a positive electrode for lithium ion secondary cell, as the positive electrode active material, a metal oxide which can be reversibly doped and undoped with lithium ions may be mentioned. As this metal oxide, for example, lithium cobalt oxide, lithium nickel oxide, lithium manganese oxide, lithium iron phosphate, lithium manganese phosphate, lithium vanadium phosphate, lithium iron vanadate, lithium nickel-manganese-cobalt oxide, lithium nickel-cobalt oxide, lithium nickel-manganese oxide, lithium iron-manganese oxide, lithium iron-manganese-cobalt oxide, lithium iron silicate, lithium iron silicate-manganese, vanadium oxide, copper vanadate, niobium oxide, titanium sulfide, molybdenum oxide, molybdenum sulfide, etc. may be mentioned. Note that, the above positive electrode active materials which are illustrated above may be suitably used alone or may be used in a plurality of types mixed together in accordance with the application. Furthermore, polyacetylene, poly-p-phenylene, polyquinone, and other polymers may be mentioned. Among these, a lithium-containing metal oxide is preferably used.

Further, when using the electrode for electrochemical device 100 of the present invention as a negative electrode for the counter electrode for the positive electrode for lithium ion secondary cell, as the negative electrode active material, easily graphitizable carbon, difficult graphitizable carbon, activated carbon, pyrolytic carbon, or other low crystalline carbon (amorphous carbon), graphite (natural graphite, artificial graphite), carbon nanowool, carbon nanotubes, or composite carbon materials of these carbons with different physical properties, tin or silicon or other alloy-based materials, silicon oxide, tin oxide, vanadium oxide, lithium titanium oxide, or other oxides, polyacene, etc. may be mentioned. Note that, the electrode active materials which are illustrated above may be used alone or may be used as a plurality of types mixed in accordance with the application.

The positive electrode active material and negative electrode active material for lithium ion secondary cell are preferably one which is shaped as particles. If the particles are shaped as spheres, it is possible to form a high density electrode when forming an electrode. Further, the positive electrode active material and the negative electrode active material for lithium ion secondary cell have volume average particle sizes, both in the case of the positive electrode and the negative electrode, of usually 0.1 to 100 $\mu$m, preferably 0.5 to 50$\mu$m, more preferably 0.8 to 20 $\mu$m. Furthermore, the positive electrode active material and negative electrode active material for lithium ion secondary cell are not particularly limited in tap densities, but a positive electrode with a density of 2 g/cm$^3$ or more and a negative electrode of 0.6 g/cm$^3$ or more are preferably used.

Alternatively, when using the electrode for electrochemical device 100 of the present invention as a positive electrode of a lithium ion capacitor, as the active material for positive electrode, activated carbon which can be reversibly doped and undoped with anions and/or cations, a polyacene-based organic semiconductor (PAS), carbon nanotubes, carbon whiskers, graphite, etc. may be mentioned. Among these as well, activated carbon and carbon nanotubes are preferable.

Further, when using the electrode for electrochemical device 100 of the present invention as a negative electrode used as the counter electrode for the positive electrode of the above-mentioned lithium ion capacitor, as the negative electrode active material, it is possible to use any of the materials which are illustrated as a negative electrode active material for lithium ion secondary cell.

The positive electrode active material and negative electrode active material for lithium ion capacitor have a volume average particle size of usually 0.1 to 100 $\mu$m, preferably 0.5 to 50 $\mu$m, more preferably 0.8 to 20 $\mu$m. Further, when using activated carbon as the positive electrode active material for lithium ion capacitor, the specific surface area of the activated carbon is 30 $m^2$/g or more, preferably 500 to 3,000 $m^2$/g, more preferably 1,500 to 2,600 $m^2$/g. Up to a specific surface area of about 2,000 $m^2$/g, the tendency is that the larger the specific surface area, the greater the electrostatic capacity per unit weight of activated carbon, but after that the electrostatic capacity does not increase that much. Conversely, the tendency is for the electrode composite layer to fall in density and fall in electrostatic capacity density. Further, having the size of the pores of the activated carbon match the size of the electrolyte ions is preferable from the viewpoint of the feature of a lithium ion capacitor of the rapid charging and discharging characteristics. Therefore, by suitably selecting the electrode active material, it is possible to obtain an electrode composite layer which has a desired capacity density and input-output characteristics.

Further, when using an electrode for electrochemical device 100 of the present invention as a positive electrode or negative electrode for electric double-layer capacitor, as the positive electrode active material and negative electrode active material, it is possible to use any of the materials illustrated as the above-mentioned positive electrode active material for lithium ion capacitor, but among them, activated carbon is preferable.

(Binder)

The binder used in the present invention is not particularly limited so long as a compound which can make the particles of the above-mentioned electrode active material bond with each other, but in the present invention, a dispersion type binder which has the property of dispersing in a solvent is preferable. As a dispersion type binder, it is possible to use a polymer which disperses in a solvent. As such a polymer, for example, a silicone-based polymer, fluorine-containing polymer, conjugated diene-based polymer, acrylate-based polymer, polyimide, polyamide, polyurethane, or other polymer compound may be mentioned. Among these, a fluorine-containing polymer, conjugated diene-based polymer and acrylate-based polymer are preferable, while a conjugated diene-based polymer and acrylate-based polymer are more preferable.

The conjugated diene-based polymer is a homopolymer of a conjugated diene or a copolymer which is obtained by polymerizing a monomer mixture which contains the conjugated diene or a hydrogenate of the same. The ratio of the conjugated diene in the monomer mixture is usually 40 wt% or more, preferably 50 wt% or more, more preferably 60 wt% or more. As specific examples of the conjugated diene-based polymer, polybutadiene or polyisoprene and other conjugated diene homopolymers; styrene-butadiene copolymer (SBR) which may be carboxylated and other aromatic vinyl-conjugated diene copolymers; acrylonitrile-butadiene copolymer (NBR) and other vinyl cyanide-conjugated diene copolymers; hydrogenated SBR, hydrogenated NBR, etc. may be mentioned.

The acrylate-based polymer is a polymer which contains monomer units which are derived from a compound expressed by the general formula (1) : $CH_2=CR^1-COOR^2$ (wherein, $R^1$ indicates a hydrogen atom or methyl group, and $R^2$ indicates an alkyl group or cycloalkyl group etc. $R^2$ may further have an ether group, hydroxyl group, carboxylic acid group, fluorine group, phosphoric acid group, epoxy group, or amino group), specifically, a homopolymer of a compound of the general formula (1) or a copolymer which is obtained by polymerizing a monomer mixture which includes a compound expressed by the general formula (1). As specific examples of the compound expressed by the general formula (1), methyl (meth)acrylate, ethyl (meth)acrylate, propyl (meth)acrylate, isopropyl (meth)acrylate, n-butyl (meth)acrylate, isobutyl (meth)acrylate, cyclohexyl (meth)acrylate, 2-ethylhexyl (meth)acrylate, isopentyl (meth)acrylate, isooctyl (meth)acrylate, isobonyl (meth)acrylate, isodecyl (meth)acrylate, lauryl (meth)acrylate, stearyl (meth)acrylate, and tridecyl (meth)acrylate, and other (meth)acrylic acid alkyl esters; butoxyethyl (meth)acrylate, ethoxydiethyleneglycol (meth)acrylate, methoxydipropyleneglycol (meth)acrylate, methoxypolyethyleneglycol (meth)acrylate, phenoxyethyl (meth)acrylate, tetrahydrofurfuryl (meth)acrylate, and other ether group-containing (meth)acrylic acid esters; 2-hydroxyethyl (meth)acrylate, 2-hydroxypropyl (meth)acrylate, 2-hydroxy-3-phenoxypropyl(meth)acrylate, 2-(meth)acryloyloxyethyl-2-hydroxyethylphthalic acid, and other hydroxyl group-containing (meth)acrylic acid esters; 2-(meth)acryloyloxyethyl phthalic acid, 2-(meth)acryloyloxyethyl phthalic acid, and other carboxylic acid-containing (meth)acrylic acid esters; perfluorooctylethyl (meth)acrylate and other fluorine group-containing (meth)acrylic acid esters; ethyl (meth)acrylate phosphate and other phosphoric acid group-containing (meth)acrylic acid esters; glycidyl (meth)acrylate and other epoxy group-containing (meth)acrylic acid esters; dimethylaminoethyl (meth)acrylate and other amino group-containing (meth)acrylic acid esters; etc. may be mentioned.

These (meth)acrylic acid esters may be used alone or in combinations of two or more types. Among these, a (meth)acrylic acid alkyl ester is preferable, while methyl (meth)acrylate, ethyl (meth)acrylate, and n-butyl (meth)acrylate or a (meth)acrylic acid alkyl ester with an alkyl group of 6 to 12 carbon atoms is more preferable. By selecting these, it becomes possible to lower the swellability with respect to an electrolytic solution and is possible to improve the cycle characteristics.

Furthermore, the acrylate-based polymer, for example, can be copolymerized with carboxylic acid esters which have two or more carbon-carbon double bonds, aromatic vinyl-based monomers, amide-based monomers, olefins, diene-based monomers, vinyl ketones, heterocycle-containing vinyl compounds, and other copolymerizable monomers. Further, it can be copolymerized with α,β-unsaturated nitrile compounds or vinyl compounds which have acid ingredients.

The ratio of content of the (meth)acrylic acid ester units in the acrylate-based polymer is preferably 50 to 95 wt%, more preferably 60 to 90 wt%. By making the ratio of content of the (meth)acrylic acid ester units in the above range, it is possible to improve the flexibility of the electrode for electrochemical device of the present invention and possible to make the resistance to cracking higher.

Further, the acrylate-based polymer may be a copolymer of the above-mentioned (meth)acrylic acid ester and a monomer which can copolymerize with this. As such a copolymerizable monomer, for example, an α,β-unsaturated nitrile compound, a vinyl compound which has an acid ingredient, etc. may be mentioned.

As the α,β-unsaturated nitrile compound, acrylonitrile, methacrylonitrile, α-chloroacrylonitrile, α-bromoacrylonitrile, etc. may be mentioned. These may be used alone or in combinations of two or more types. Among these as well, acrylonitrile and methacrylonitrile are preferable, and acrylonitrile is more preferable.

The ratio of content of the α,β-unsaturated nitrile compound units in the acrylate-based polymer is usually 0.1 to 40 wt%, preferably 0.5 to 30 wt%, more preferably 1 to 20 parts by weight in range. By making the ratio of content of the α,β-unsaturated nitrile compound units in the above range, it is possible to further raise the bonding force as the binder.

Further, as a vinyl compound which has an acid ingredient, acrylic acid, methacrylic acid, itaconic acid, maleic acid, fumaric acid, etc. may be mentioned. These may be used alone or in combinations of two or more types. Among these as well, acrylic acid, methacrylic acid, and itaconic acid are preferable, while methacrylic acid and itaconic acid are more preferable, In particular, it is preferable to jointly use methacrylic acid and itaconic acid.

The ratio of content of the units of the vinyl monomer which has an acid ingredient in the acrylate-based polymer is preferably 1.0 to 10 wt%, more preferably 1.5 to 5.0 wt%. By making the ratio of content of the units of the vinyl monomer which has an acid ingredient in the above range, it is possible to improve the stability at the time when preparing a slurry.

Furthermore, the acrylate-based polymer may be a copolymer of the above-mentioned monomers and other copolymerizable monomers. As this other monomers, for example, carboxylic acid esters which have two or more carbon-carbon double bonds, aromatic vinyl-based monomers, amide-based monomers, olefins, diene-based monomers, vinyl ketones, heterocycle-containing vinyl compounds, etc. may be mentioned.

The shape of the dispersion type binder used in the present invention is not particularly limited, but a particle shape is preferable. By making it a particle shape, the bonding ability is good and further a drop in the capacity of the prepared electrode or deterioration due to repeated charging and discharging can be suppressed. As the particle-shaped binder, for example, one in a state like a latex where the particles of the binder are dispersed in water or a particle-shaped one which is obtained by drying such a dispersion may be mentioned.

The dispersion type binder used in the present invention has a volume average particle size of preferably 0.001 to 100 μm, more preferably 10 to 1000 nm, furthermore preferably 50 to 500 nm. By making the average particle size of the dispersion type binder used in the present invention in the above range, the stability at the time of preparing a slurry is made good while the strength and flexibility of the electrode for electrochemical device of the present invention become excellent.

The content of the binder in the electrode for electrochemical device of the present invention is, based on dry weight, usually 0.1 to 50 parts by weight with respect to 100 parts by weight of the electrode active material, preferably 0.5 to 20 parts by weight, more preferably 1 to 15 parts by weight. If the content of the binder is in this range, the adhesion between the electrode active material layer and current collector can be sufficiently secured and the internal resistance can be lowered.

(Microstructure of Electrode active material Layer 200)

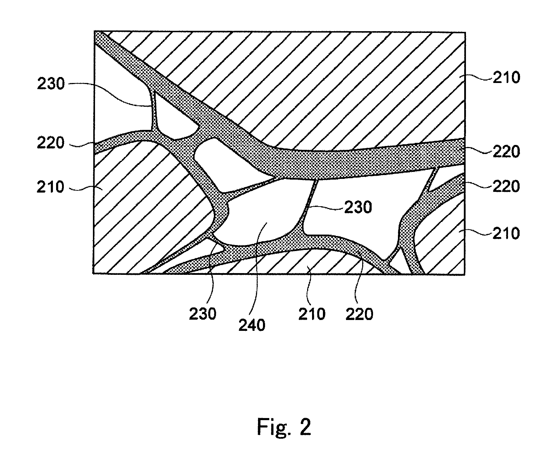

Next, the microstructure of the electrode active material layer 200 which forms part of the electrode for electrochemical device 100 of the present invention will be explained. FIG. 2 is a pattern diagram which shows the microstructure of the electrode active material layer 200 which forms part of the electrode for electrochemical device 100 of the present invention. Note that, FIG. 2 shows the microstructure of the cross-section of the electrode active material layer 200.

As shown in FIG. 2, the electrode active material layer 200 according to the present invention includes an electrode active material 210 and binder. Part of the binder is present in a state covering at least parts of the surfaces of pluralities of particles of the electrode active material 210 and forms binder-covered parts 220. Further, as shown in FIG. 2, the binder-covered parts which cover mutually adjoining pluralities of particles of the electrode active material 210 are connected with each other by binder-connecting parts 230 which are comprised of the binder similarly. Due to this, the mutually adjoining pluralities of particles of the electrode active material 210 are bonded together by the binder-covered parts 220 and binder-connecting parts 230. That is, the binder-connecting parts 230 are present in a form which connect binder-covered parts 220 which cover mutually adjoining pluralities of particles of the electrode active material 210 in space parts 240 which are formed by the mutually adjoining pluralities of particles of the electrode active material 210.

In the present invention, the electrode active material layer 200 is configured in this way so that the mutually adjoining pluralities of particles of electrode active material 210 are bonded together by the binder-covered parts 220 and binder-connecting parts 230, so, as shown in FIG. 2, space parts 240 which are formed by the mutually adjoining pluralities of particles of electrode active material 210 are secured. For this reason, when using an electrode for electrochemical device 100 of the present invention which has such an electrode active material layer 200 to obtain an electrochemical device, the electrolytic solution permeates the space parts 240 and thereby an interface between the electrode active material 210 and the electrolytic solution can be suitably formed. The adhesion to the current collector 300 can be maintained high while the wettability with respect to the electrolytic solution can be made excellent. Further, as a result, it is possible to reduce the internal resistance and possible to improve the cycle characteristics when made into an electrochemical device.

In particular, the electrode active material layer 200 which forms part of the electrode for electrochemical device 100 of the present invention is not one where the space parts 240 which are formed by the mutually adjoining pluralities of particles of electrode active material 210 are completely surrounded by the components which form the electrode active material layer 200, that is, electrode active material 210, binder-covered parts 220, and binder-connecting parts 230. The space parts 240 are connected inside the electrode active material layer 200. For this reason, the electrolytic solution which permeates into the space parts 240 and the ions which are contained in the electrolytic solution can easily disperse inside the electrode active material layer 200. For this reason, the ion conduction inside the electrode active material layer 200 can be raised.

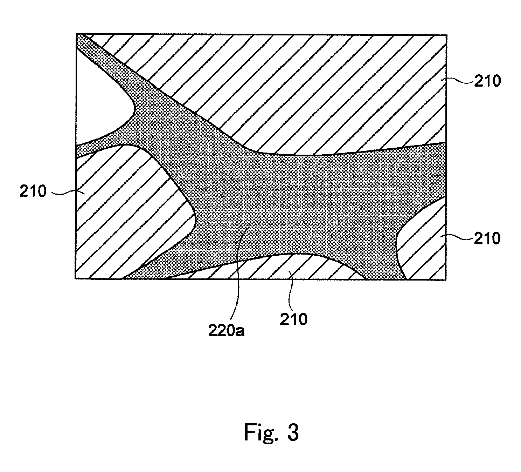

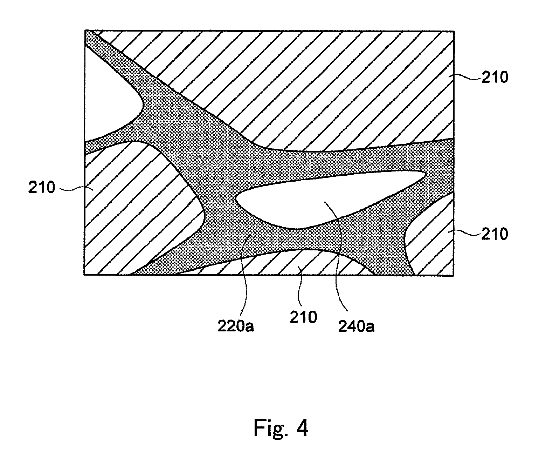

Note that, the conventional electrode for electrochemical device such as the above-mentioned Patent Document 1, for example, had a microstructure of a structure such as shown in FIG. 3 and FIG. 4. That is, as shown in FIG. 3, in the conventional electrode for electrochemical device, in the electrode active material layer, the spaces which were formed by the mutually adjoining pluralities of particles of electrode active material 210 were completely filled by the binder 220a. Alternatively, as shown in FIG. 4, the spaces which were formed by the mutually adjoining pluralities of particles of electrode active material 210 were filled by the binder 220a, but had space parts 240a inside them.

Further, in the microstructures such as shown in FIG. 3 and FIG. 4, it was hard for the electrolytic solution to permeate to the electrode active material 210. For this reason, the interface between the electrode active material 210 and the electrolytic solution was not suitably formed and, as a result, there was the trouble that the internal resistance when made into an electrochemical device ended up rising. Note that, in the microstructure such as shown in FIG. 4, while space parts 240a were formed in the binder 220a, the space parts 240a were completely enclosed by the binder 220a and were isolated from the surroundings. For this reason, it was hard for the electrolytic solution which permeated into the space parts 240a and the ions which were contained in the electrolytic solution to disperse inside the electrode for electrochemical device. For this reason, they did not substantially contribute to the improvement of the ion conductivity inside the electrode for electrochemical device use.

As opposed to this, in the present invention, by making the microstructure of the electrode active material layer 200 the structure such as shown in FIG. 2, it is possible to effectively solve the problems in the above prior art.

In the electrode active material layer 200 which forms part of the electrode for electrochemical device 100 of the present invention, the length of the binder-connecting parts 230 is preferably 0.01 to 5 $\mu$m, furthermore preferably 0.02 to 2 $\mu$m. By making the lengths of the binder-connecting parts 230 in the above range, it is possible to maintain the ion conductivity in the electrode active material layer 200 sufficiently high while making the bonding force among particles of the electrode active material 210 sufficiently high.

The binder-connecting parts 230 are not particularly limited in shapes and need only be shapes which do not enclose the space parts 240. While not particularly limited, fibrous and/or sheet shapes are preferable. In particular, the binder-connecting parts 230 are preferably fibrous and/or sheet-shaped ones which are formed by compressing the binder-covered parts 220 which cover the mutually adjoining particles of the electrode active material 210 while applying a shear force in the process of formation of the electrode active material layer 200.

Note that, the binder-covered parts 220 need only comprise binder which covers at least parts of the surfaces of particles of the electrode active material 210. For example, parts of the surfaces of the particles of the electrode active material 210 may be parts which are not covered by the binder-covered parts 220. Further, the binder-covered parts 220 which cover the mutually adjoining particles of the electrode active material 210, as shown in FIG. 2, are not formed integrally (that is, are not in states such as shown in FIG. 3 and FIG. 4) but are formed mutually independently.

However, on the other hand, for example, inside of the electrode active material layer 200, when the mutually adjoining particles of the electrode active material 210 are so extremely close that space parts 240 for impregnation of the electrolytic solution are hard to form, the binder-covered parts 220 which cover the mutually adjoining particles of the electrode active material 210 may partially contact each other. Alternatively, in such a case, the mutually adjoining particles of the electrode active material 210 may directly contact each other without interposition of the binder-covered parts 220 at the parts where no binder-covered parts 220 are formed.

Next, the method of production of an electrode for electrochemical device 100 of the present invention will be explained. The electrode for electrochemical device 100 of the present invention, for example, can be produced by first obtaining the composite particles for electrode which are comprised of the electrode active material and binder for forming the electrode active material layer 200, forming the obtained composite particles for electrode on the curretn collector 300, and compressing the thus obtained shaped member while applying a shear force.

Below, first, the composite particles for electrode will be explained.

(Composite Particles for Electrode)

The composite particles for electrode are obtained by granulation using as materials the electrode active material, binder, and, in accordance with need, optional ingredients and include at least the electrode active material and binder. These are not present respectively as separately independent particles. Two or more ingredients including the component ingredients of the electrode active material and binder are used to form single particles. Specifically, pluralities of the individual particles of the two or more ingredients bond together to form secondary particles. Pluralities (preferably several to several tens of) particles of the electrode active material are preferably bonded together by the binder to form particles.

Further, the composite particles for electrode use are preferably shaped substantially as spheres from the viewpoint of the fluidity. That is, when making the short axis of the composite particles $L_s$ and the long axis $L_l$, making $L_a=(L_s+L_l)/2$, and defining the value of $(1-(L_l-L_s)/L_a)\times100$ as the sphericity (%), a sphericity of 80% or more is preferable, while 90% or more is more preferable. Here, the short axis $L_s$ and the long axis $L_l$ are values which are measured by a scan electron micrograph.

Furthermore, the composite particles for electrode have a volume average particle size of usually 0.1 to 1000 $\mu$m, preferably 1 to 200 $\mu$m, more preferably 30 to 150 $\mu$m in range. By making the volume average particle size of the composite particles in this range, it is possible to easily obtain the desired thickness of the electrode composite layer, so this is preferable. The average particle size of the composite particles is the volume average particle size which is calculated using the result of the measurement by a laser diffraction type particle size distribution measuring apparatus (for example, SALD-3100; made by Shimadzu).

Further, the structure of the composite particles for electrode is not particularly limited, but a structure where the binder does not segregate at the surface of the composite particles but uniformly disperses in the composite particles is preferable.

Note that, the optional ingredients which can be included in the composite particles for electrode are not particularly limited, but for example an conductive material, dispersant, etc. may be mentioned.

The conductive material is not particularly limited so long as a particle-shaped material which has conductivity, but, for example, furnace black, acetylene black, and ketjen black, or other conductive carbon black; natural graphite, artificial graphite, or other graphite; polyacrylonitrile-based carbon fiber, pitch-based carbon fiber, carbon fiber obtained by vapor phase method, or other carbon fiber; may be mentioned. Among these, acetylene black and ketjen black are preferable. The average particle size of the conductive material is not particularly limited, but it is preferably one smaller than the average particle size of the electrode active material, usually 0.001 to 10 $\mu$m, more preferably 0.05 to 5 $\mu$m, furthermore preferably 0.01 to 1 $\mu$m in range. If the average particle size of the conductive material is in the above range, a sufficient conductivity can be obtained with a smaller amount of use. The amount of use of the conductive material when adding the conductive material is not particularly limited so long as in the range not detracting from the advantageous effects of the present invention, but is preferably 0.1 to 50 parts by weight with respect to 100 parts by weight of the electrode active material, more preferably 0.5 to 15 parts by weight, furthermore preferably 1 to 10 parts by weight. By making the ratio of content of the conductive material the above range, it becomes possible to maintain the capacity of the obtained electrochemical device high while sufficiently reducing the internal resistance.

The dispersant is an ingredient which has the action of making the ingredients uniformly disperse in a solvent when making the ingredients which form the composite particles for electrode disperse or dissolve in a solvent to prepare a slurry. As specific examples of the dispersant, carboxymethyl cellulose, methyl cellulose, ethyl cellulose, hydroxypropyl cellulose, and other cellulose-based polymers and ammonium salts or alkali metal salts of the same; alginic acid propylene glycol ester and other alginic acid esters and sodium alginate and other alginates, polyacrylic acid and sodium polyacrylate (or methacrylate) and other polyacrylic acid (or methacrylic acid) salts, polyvinyl alcohol, modified polyvinyl alcohol, polyethylene oxide, polyvinyl pyrrolidone, polycarboxylic acid, starch oxide, starch phosphate, casein, various modified starches, chitin, chitosan derivatives, etc. may be mentioned. Further, it is possible to use a water-soluble polymer which contains one or more, preferably two or more, of a carboxyl group, sulfonic acid group, fluorine-containing group, hydroxyl group phosphoric acid group, and other groups (specific group-containing water-soluble polymer) as the dispersant.

These dispersants may be used alone or as two or more types combined. Among these, a cellulose-based polymer is preferable, while carboxymethyl cellulose or its ammonium salt or alkali metal salt is particularly preferable. Further, the specific group-containing water-soluble polymer is also preferable. As the specific group-containing water-soluble polymer, an acryl-based polymer which has the specific groups and includes acrylic acid ester monomer units or methacrylic acid ester monomer units is particularly preferable.

The ratio of content of the dispersant in the case of adding a dispersant is not particularly limited so long as in a range not detracting from the effect of the present invention, but is usually 0.1 to 10 parts by weight with respect to 100 parts by weight of the electrode active material, preferably 0.5 to 5 parts by weight, more preferably 0.8 to 2 parts by weight in range.

Next, the specific method of production of such composite particles for electrode will be explained.

The method of production of the composite particles for electrode used in the present invention is not particularly limited, but the following explained two methods of production can be used to easily obtain the composite particles for electrode.

First, the first method of production is the fluidized bed granulation method. The fluidized bed granulation method includes a step of obtaining a slurry which contains a binder and, in accordance with need, an conductive material, dispersant, or other optional ingredients and a step of making the electrode active material flow through a heated stream of gas, spraying the slurry obtained there, making the particles of the electrode active material bond together, and drying the same.

Below, the fluidized bed granulation method will be explained.

First, a slurry which contains a binder and, in accordance with need, an conductive material, dispersant, or other optional ingredient is obtained. Note that, in this case, when the binder is one which is dispersed in a dispersion medium constituted by water, it can be added in a state dispersed in water. Further, as the solvent which is used to obtain the slurry, most preferably water is used, but an organic solvent can also be used. As the organic solvent, for example, methyl alcohol, ethyl alcohol, propyl alcohol, and other alkyl alcohols; acetone, methylethylketone, and other alkylketones; tetrahydrofuran, dioxane, diglyme, and other ethers; diethylformamide, dimethylacetoamide, N-methyl-2-pyrrolidone, dimethylimidazolidinone, and other amides etc. may be mentioned, but alkyl alcohols are preferable. If jointly using an organic solvent with a lower boiling point than water, at the time of fluidized granulation, the drying speed can be made faster. Further, if jointly using an organic solvent with a lower boiling point than water, the dispersability of the binder or the solubility of the solution type resin changes and the viscosity of the slurry can be adjusted by the amount or type of the fluid solvent, so the production efficiency can be improved.

The amount of the solvent which is used when preparing the slurry is an amount giving a solid content concentration of the slurry of usually 5 to 70 wt%, preferably 10 to 60 wt%, more preferably 15 to 50 wt% in range. If the amount of solvent is in this range, the binder uniformly disperses, so this is preferable.

Further, the method or order of dispersing or dissolving the binder and, in accordance with need, the conductive material, dispersant, or other optional ingredients in a solvent is not particularly limited. For example, the method of adding and mixing a binder and, in accordance with need, a conductive material, dispersant, or other optional ingredients to a solvent, the method of dissolving a dispersant in a solvent, then adding and mixing a binder which has been dispersed in a solvent (for example, latex), and finally adding and mixing a conductive material or other additives, the method of adding and mixing a conductive material in a dispersant which is dissolved in a solvent and adding and mixing a binder which is dispersed in a solvent to the same etc. may be mentioned. As a mixing device, for example, a ball mill, sand mill, beads mill, pigment disperser, stone mill, ultrasonic disperser, homogenizer, planetary mixer, or other mixing device may be mentioned. The mixing is usually performed at room temperature to 80°C in range for 10 minutes to several hours.

Next, the electrode active material is fluidized, then the above obtained slurry is sprayed there for fluidized granulation. As the fluidized granulation, a method by a fluidized bed, a method by an arranged fluidized bed, a method by a spouted bed, etc. may be mentioned. The method by a fluidized bed uses hot air to make the electrode active material fluid and sprays into this from a sprayer etc. the above obtained slurry to cause aggregation and granulation. The method by an arranged fluidized bed is similar to the one by the above-mentioned fluidized bed, but gives a circulating flow to the powder in the bed utilizes the grading effect to grow the particles relatively large and discharge the resultant particles. Further, the method by a spouted bed utilizes the features of a spouted bed to make slurry deposit on coarse particles from a sprayer etc. and dry it at the same time to cause granulation. As the method of production of composite particles in the present invention, the method by the fluidized bed or arranged fluidized bed among these three methods is preferable.

The temperature of the slurry which is sprayed is usually room temperature, but the slurry may also be warmed to make it more than room temperature. The temperature of the hot air which is used for fluidization is usually 70 to 300°C, preferably 80 to 200°C.

According to the fluidized bed granulation method, by the above methods of production, it is possible to obtain composite particles for electrode which include an electrode active material, binder, and, accordance with need, conductive material, dispersant, or other optional ingredients.

Further, the second method of production of composite particles for electrode is the spray dry granulation method. According to the spray dry granulation method which is explained below, the composite particles for electrode used in the present invention can be obtained relatively easily, so this is preferable. Below, the spray dry granulation will be explained.

First, a slurry for composite particles which contains an electrode active material and binder is prepared. The slurry for composite particles can be prepared by dispersing or dissolving an electrode active material, binder, and, in accordance with need, an conductive material, dispersant, or other optional ingredient in a solvent. Note that, in this case, when the binder is one which is dispersed in a dispersion medium constituted by water, it can be added in the state dispersed in water. As the solvent which is used for obtaining the slurry for composite particles, usually water is used, but a mixed solvent of water and an organic solvent may also be used. As the organic solvent which can be used in this case, ones similar to the above-mentioned fluidized bed granulation method may be used.

Further, the viscosity of the slurry for composite particles at room temperature is preferably 10 to 3,000 mPa·s, more preferably 30 to 1,500 mPa·s, furthermore preferably 50 to 1,000 mPa·s in range. If the viscosity of the slurry for composite particles is in this range, the productivity of the spray dry granulation process can be raised.

Further, in the present invention, when preparing the slurry for composite particles, in accordance with need, a surfactant may be added. As the surfactant, an anionic surfactant, cationic surfactant, nonionic surfactant, nonionic anion surfactant, or other amphoteric surfactant may be mentioned, but an anionic or nonionic surfactant which can easily break down under heat is preferable. The amount of the surfactant is preferably 50 parts by weight or less with respect to 100 parts by weight of the electrode active material, more preferably 0.1 to 10 parts by weight, furthermore preferably 0.5 to 5 parts by weight.

The method or order of dispersing or dissolving the electrode active material, binder, and, in accordance with need, the conductive material, dispersant, or other optional ingredient in a solvent is not particularly limited. Further, as the mixing device, ones which are similar to the above-mentioned fluidized bed granulation method can be used. The mixing is usually performed at room temperature to 80°C in range for 10 minutes to several hours.

Next, the obtained slurry for composite particles was granulated by spray drying. Spray drying is a method of spraying a slurry in hot air to dry it. As the device which is used for spraying the slurry, an atomizer may be mentioned. As an atomizer, two types of devices of a rotary disk system and a pressurizing system may be mentioned. The rotary system type is a system which introduces the slurry at the approximate center of a disk which is rotating at a high speed, uses the centrifugal force of the disk to fling the slurry to the outside of the disk, and atomizes the slurry at that time. In the rotary disk type, the rotational speed of the disk depends on the size of the disk, but is usually 5,000 to 30,000 rpm, preferably 15,000 to 30,000 rpm. The lower the rotational speed of the disk, the larger the sprayed drops and the greater the average particle size of the obtained composite particles. As the rotary disk type atomizer, the pin type and the vane type may be mentioned, but a pin type atomizer is preferable. The pin type atomizer is one type of centrifugal atomizer which uses a spray disk. The spray disk is configured by a top and bottom mounting disk between which a plurality of spray rollers are detachably attached on a substantially concentric circle along their circumferential edges. The slurry for composite particles is introduced from the center of the spray disk, deposits on the spray rollers by centrifugal force, passes over the roller surfaces to the outside, and finally detaches from the roller surfaces and is sprayed outward. Further, a vane type atomizer is formed by cutting slits inside of the spray disk and by having the slurry for composite particles pass through its center. On the other hand, the pressurized system is a system which pressurizes the slurry for composite particles and sprays it from a nozzle to dry it. The pressurized nozzle system or the pressurized two-fluid nozzle system etc. may be mentioned.

The temperature of the slurry for composite particles which is sprayed is usually room temperature, but it may also be made a temperature higher than room temperature by heating. Further, the hot air temperature at the time of spray drying is usually 80 to 250°C, preferably 100 to 200°C. In the spray drying method, the method of blowing in the hot air is not particularly limited. For example, the system where the hot air and spray directions are concurrent in the horizontal direction, the system where the slurry is sprayed at the top part of the drying tower and descends together with the hot air, the system where the sprayed drops and hot air contact countercurrently, the system where the sprayed drops flow concurrently with the initial hot air then descend by gravity and contact it countercurrently, etc. may be mentioned.

According to the spray dry granulation method, the above method of production can be used to obtain composite particles for electrode which contain an electrode active material, binder, and, in accordance with need, an conductive material, dispersant, or other optional ingredients.

(Method of Production of Electrode for Electrochemical Device 100)

Next, the method of production which uses the above-mentioned composite particles for electrode to produce an electrode for electrochemical device 100 will be explained.

(Method of Production of Electrode for Electrochemical Device 100 According to First Example)

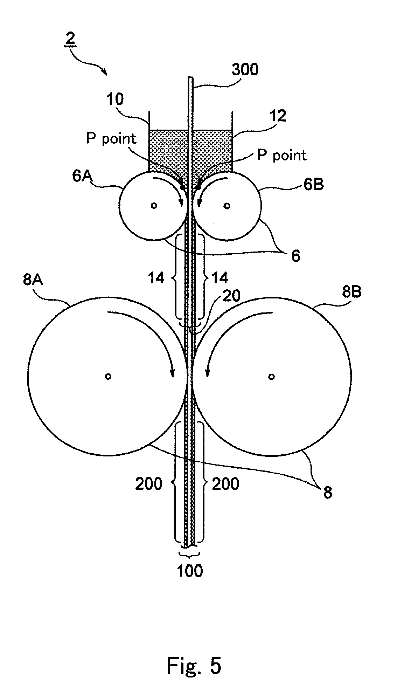

FIG. 5 is a schematic view which shows an electrode forming apparatus for producing an electrode for electrochemical device 100 of the present invention according to a first example. As shown in FIG. 5, the electrode forming apparatus 2 is provided with pre-forming rolls 6 which are comprised of a pair of rolls 6A and 6B arranged horizontally and in parallel and forming rolls 8 which are comprised of a pair of rolls 8A and 8B arranged horizontally and in parallel below the pre-forming rolls 6. The composite particles for electrode (in the figure, indicated by reference numeral "12") are stored in a space which is formed above the pre-forming rolls 6 by the pre-forming rolls 6 and partition plates 10.

Further, in the electrode forming apparatus 2, first, the pair of rolls 6A and 6B which form the pre-forming rolls 6 rotate in the arrow directions which are shown in FIG. 5 to thereby take in the composite particles for electrode 12 and compress the composite particles for electrode 12 on both or one side of the current collector (in FIG. 5, shown by reference numeral "300") in a preliminary manner. Further, due to this, both or one side of the current collector 300 which passes between the pair of rolls 6A and 6B has the composite particles for electrode 12 preliminarily compressed on it to form a sheet-shaped pre-formed member 14 comprised of composite particles for electrode 12 and thereby form a pre-electrode laminate 20 comprised of a current collector 300 on both or one side of which a sheet-shaped pre-formed member 14 is formed.

Note that, the current collector 300 used in the present invention is one which is used for taking out current from the electrode active material layer 200 and is a long sheet-shaped one.

As the type of material which forms the current collector, for example, a metal, carbon, conductive polymer, etc. may be mentioned. Among these, a metal is preferable. More specifically, as a current collector for positive electrode, aluminum, stainless steel, etc., while as a current collector for negative electrode, stainless steel, copper, nickel, etc. may be mentioned. Further, the current collector may be structured without through holes, but the method of the present invention is particularly suited to a current collector which has through holes. As a current collector which has through holes, for example, expand metal, punched metal, a metal net, a foam member, an etched foil which is etched to provide through holes, a current collector with projections given projections and through holes using an embossing roll, etc. may be mentioned.

The shape of the hole parts of the current collector which has through holes is not particularly limited, but an aperture rate of 10 to 90% is preferable, 20 to 60% is more preferable, and 40 to 60% is particularly preferable. The aperture rate is found by observation of the surface of the perforated current collector. Specifically, the perforated current collector is observed at its surface and the area of the through holes per unit area is calculated to determine the aperture rate.

The long sheet-shaped current collector may be formed with an conductive adhesion layer on the surface.

The conductive adhesion layer contains an conductive substance as an essential ingredient and contains a binder for forming in accordance with need. By the conductive adhesion layer containing a binder, it is possible to raise the adhesion between the current collector 300 and the electrode active material layer 200, reduce the internal resistance of the electrochemical device, and raise the output density.

The conductive substance used in the conductive adhesion layer is not particularly limited so long as able to impart electroconductivity to the adhesion layer, but an conductive filler or metal oxide filler is preferable, while an conductive filler is more preferable. The metal oxide filler is not particularly limited, but silica, ferric oxide, or titanium oxide may be mentioned. Among these, silica is preferable. The conductive filler is not particularly limited so long as having electroconductivity, but among these, conductive carbon black, graphite, etc. are particularly preferable. The conductive filler has a volume average particle size of usually 0.001 to 10 $\mu$m, preferably 0.05 to 5 $\mu$m, more preferably 0.01 to 1 $\mu$m in range. These conductive fillers can be used alone or as two or more types combined.

The binder used for the conductive adhesion layer is not particularly limited so long as a compound which enables the electrode active material layer and the current collector to be bonded with each other. Among these as well, a dispersion type binder with the property of dispersing in a solvent is preferable. As the dispersion type binder, for example, a fluorine-based polymer, diene-based polymer, acrylate-based polymer, polyimide, polyamide, polyurethane-based polymer, or other polymer compound may be mentioned. Among these as well, a fluorine-based polymer, diene-based polymer, or acrylate-based polymer is preferable. A diene-based polymer or acrylate-based polymer is more preferable in the point that the withstand voltage can be raised and the energy density of the electrochemical device can be raised.

In the present invention, the content of the binder in the conductive adhesion layer is preferably 0.5 to 20 parts by mass with respect to 100 parts by mass of the conductive substance, more preferably 1 to 15 parts by mass, particularly preferably 2 to 10 parts by mass.

The conductive adhesion layer may include a conductive substance and a suitably used binder material and may further contain a dispersant for dispersing these uniformly. As specific examples of the dispersant, carboxymethyl cellulose, methyl cellulose, ethyl cellulose, hydroxypropyl cellulose, and other cellulose-based polymers and ammonium salts or alkali metal salts of the same; sodium polyacrylate and other poly(meth)acrylic acid salts; polyvinyl alcohol, modified polyvinyl alcohol, polyethylene oxide; polyvinyl pyrrolidone, polycarboxylic acid, starch oxide, starch phosphate, casein, various modified starches, chitin, chitosan derivatives, etc. may be mentioned. These dispersants may be used alone or as two or more types combined. Among these, a cellulose-based polymer is preferable, while carboxymethyl cellulose or its ammonium salt or alkali metal salt is particularly preferable.

The amount of use of the dispersant is not particularly limited so long as used in a range not impairing the advantageous effect of the present invention, but is usually 0.1 to 15 parts by mass with respect to 100 parts by mass of the conductive substance, preferably 0.5 to 10 parts by mass, more preferably 0.8 to 5 parts by mass in range.

The conductive adhesion layer can be formed by coating a conductive adhesion composition which is obtained by kneading an conductive substance, a suitably used binder, or, in accordance with need, a dispersant in water or an organic solvent, and then drying it.

The method of production of the conductive adhesion layer composition is not particularly limited, but specifically a ball mill, sand mill, pigment disperser, stone mill, ultrasonic disperser, homogenizer, planetary mixer, Hobart mixer, etc. may be used.

The method of formation of the conductive adhesion layer is not particularly limited. For example, the above conductive adhesion layer composition is formed on a current collector by the doctor blade method, dip method, reverse roll method, direct roll method, gravure method, extrusion method, brushing method, etc.

As the drying method, for example, drying by warm air, hot air, or low humidity air, vacuum drying, and drying by irradiation by (far) infrared rays or electron beams etc. may be mentioned. Among these, the method of drying by irradiation by far infrared rays is preferable. The drying temperature and the drying time are preferably a temperature and time enabling the solvent in the coated conductive adhesion composition to be completely removed. The drying temperature is 50 to 300°C, preferably 80 to 250°C. The drying time is usually 2 hours or less, preferably 5 seconds to 30 minutes.

The conductive adhesion layer has a thickness of usually 1 to 25 $\mu$m, preferably 2 to 20 $\mu$m, more preferably 2 to 10 $\mu$m. By having the conductive adhesion layer have a thickness in the above range, the anchor effect is exhibited well and the electron movement resistance can be reduced. Note that, the conductive adhesion layer may be formed on just one surface of the current collector or may be formed on both surfaces.

The current collector used in the present invention is a long sheet shape. The thickness of the current collector is not particularly limited, but is preferably 5 to 50 $\mu$m, more preferably 10 to 40 $\mu$m. Further, the width of the current collector is not particularly limited, but is preferably 100 to 1000 mm, more preferably 200 to 500 mm.

Here, when using the pre-forming rolls 6 to form the sheet-shaped pre-formed member 14, the obtained sheet-shaped pre-formed member 14 is preferably compressed by a pressure which gives a porosity of preferably 40 to 80%, more preferably 50 to 70%. Alternatively, the sheet-shaped pre-formed member 14 is preferably comprised by a pressure which gives a sheet density of preferably 130 to 300% in range with respect to the bulk density of the composite particles for electrode 12, more preferably 150 to 250%, furthermore preferably 180 to 230% in range. Specifically, the linear pressure at the time of using the pre-forming rolls 6 for compression is preferably 1 to 50 kN/m, more preferably 5 to 20 kN/m.

Further, the pre-electrode laminate 20 which is obtained by using the pair of rolls 6A and 6B which forms the pre-forming rolls 6 to compress the composite particles for electrode 12 is sent to the forming roll 8 side. The pair of rolls 8A and 8B which form the forming rolls 8 rotate in the arrow directions which are shown in FIG. 5, whereby the sheet-shaped pre-formed member 14 which forms the pre-electrode laminate 20 is further compressed. Further, due to this, using the pair of rolls 8A and 8B, the sheet-shaped pre-formed member 14 which forms the pre-electrode laminate 20 is compressed and an electrode for electrochemical device 100 which is comprised of a current collector 300 on both surfaces or one surface of which an electrode active material layer 200 is formed is formed.

In the present invention, when the forming rolls 8 are used to further compress the sheet-shaped pre-formed member 14 and form the electrode active material layer 200, it is desirable to compress the sheet-shaped pre-formed member 14 while applying a shear force. By compressing it while applying a shear force, it is possible to make the microstructure of the obtained electrode active material layer 200 a configuration which has the binder-covered parts 220 and binder-connecting parts 230 such as shown in FIG. 2. Specifically, by compressing it while applying a shear force, in the sheet-shaped pre-formed member 14, a shear force is applied between the binder-covered parts 220 which cover the mutually adjoining particles of the electrode active material 210. Due to this, when the binder-covered parts 220 contact each other, the shear force causes parts of the binder-covered parts 220 to fibrillate, whereby fibrous and/or sheet-shaped binder-connecting parts 230 are formed.

Note that, when using the forming rolls 8 to further compress the sheet-shaped pre-formed member 14 and form the electrode active material layer 200, it is sufficient to compress the sheet-shaped pre-formed member 14 by a pressure which applies a shear force. The pressure is not particularly limited, but a pressure which is higher than the pressure by the pre-forming rolls 6 is preferable. Specifically, the linear pressure at the time of using the forming rolls 8 for compression is preferably 150 to 1000 kN/m, more preferably 250 to 800 kN/m, furthermore preferably 300 to 500 kN/m. Further, the sheet-shaped pre-formed member 14 may be given a shear force by making the rolls 8A and 8B which form the forming rolls 8 rotate at different speeds. Note that, the electrode active material layer 200 which is obtained in this way has a porosity of preferably 10 to 40%, more preferably 25 to 35%.

In this way, it is possible to obtain an electrode for electrochemical device 100 which is comprised of a current collector 300 on which an electrode active material layer 200 is formed.

Note that, in the above-mentioned electrode forming apparatus 2, the pre-forming rolls 6 and forming rolls 8 may be provided with temperature adjustment mechanisms which can cool, warm, or otherwise adjust the temperature in accordance with the type and properties of the composite particles for electrode 12. As the temperature adjustment mechanisms, the method of using a heat medium which is arranged at the inside of the rolls 6A and 6B and the rolls 8A and 8B, the method of warming directly by heat conducting rays etc., etc. may be mentioned.

Further, when using pre-forming rolls 6 to compress the composite particles for electrode 12, the smaller the roll diameters of the pair of rolls 6A and 6B which form the pre-forming rolls 6, the smaller the amount of composite particles for electrode 12 which are taken in and the smaller the thickness of the sheet-shaped pre-formed member 14 and the finally obtained electrode active material layer 200. On the other hand, if the roll diameter of the pair of rolls 6A and 6B which form the pre-forming rolls 6 is too small, the rolls deform when compressing the composite particles for electrode 12 and thereby the sheet-shaped pre-formed member 14 is liable to vary in thickness.

Here, the point which is positioned near the roll nip point (point where the gap between the pair of rolls 6A and 6B becomes narrowest) and where the circumferential speed of the rolls and the speed of movement of the composite particles for electrode 12 become the same is referred to as the "P point", but if the span from the P point where the basis weight is determined to the outlet of the composite particles for electrode 12 (bottom parts of rolls 6A and 6B of the pre-forming rolls 6) is not filled by the composite particles for electrode 12, the flow and aggregation of the composite particles for electrode 12 when forming the sheet-shaped pre-formed member 14 sometimes results in a mottled effect or streaks. Further, when the rotational speed of the rolls 6A and 6B is constant, the smaller the roll diameter, the lower the P point. Therefore, by reducing the roll diameter, it is possible to reduce the volume between the P point and the outlet of the composite particles for electrode 12 and, further, the more the fluidity and aggregation of the powder when forming the sheet-shaped pre-formed member 14 can be suppressed, so it is possible to make the finally obtained electrode active material layer 200 a thin film.

For this reason, considering this point, the roll diameter of the pair of rolls 6A and 6B which form the pre-forming rolls 6 is preferably 10 to 500 mm, more preferably 10 to 250 mm, furthermore preferably 10 to 150 mm.

Further, the roll diameter of the pair of rolls 8A and 8B which form the forming rolls 8 should be made one which is larger than the roll diameter of the pair of rolls 6A and 6B which form the pre-forming rolls 6 so that the pressure at the time of compressing the sheet-shaped pre-formed member 14 becomes larger than the pressure by the pre-forming rolls 6, but the roll diameter is preferably 50 to 1000 mm, more preferably 100 to 500 mm.

Further, the electrode for electrochemical device 100 of the present invention which is obtained in this way has a high adhesion between the electrode active material layer and current collector and excellent wettability with respect to the electrolytic solution since the electrode active material layer 200 has a microstructure such as shown in FIG. 2. Due to this, when made into a cell, the internal resistance is low and the cycle characteristics is excellent. Making use of such properties, electrodes for various types of electrochemical devices such as a lithium ion secondary cell, electric double-layer capacitor, hybrid capacitor, etc. may be used.

(Method of Production of Electrode for Electrochemical Device 100 According to Second Example)

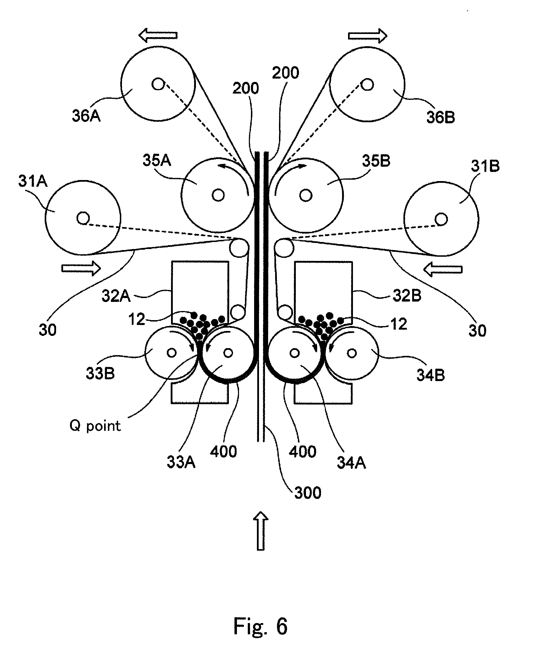

Next, the method of production of an electrode for electrochemical device 100 according to a second example will be explained. FIG. 6 is a schematic view which shows an electrode forming apparatus for producing an electrode for electrochemical device 100 of the present invention according to the second example.

In the second example, first, the composite particles for electrode (in FIG. 6, shown by reference numeral "12") are compressed to make them deposit on the surface of a long sheet-shaped support (in FIG. 6, shown by reference numeral "30") and form a compressed powder layer on a long sheet-shaped support.

In the process of formation of a compressed powder layer on a sheet-shaped support, roll pressing, belt pressing, or other methods may be employed. Among these, roll pressing is preferable. In FIG. 6, the method of roll pressing is used for compressing the composite particles for electrode 12 to make them deposit on the surface of a long sheet-shaped support 30 and form a compressed powder layer 400.

The rolls which are used in this example are a pair of rolls which rotate in opposite directions like the roll 33A and roll 33B which is shown in FIG. 6.

The circumferential speed of the roll 33A is usually 0.1 to 100 m/min, preferably 1 to 50 m/min. The circumferential speed of the roll 33B is usually 0.1 to 100 m/min, preferably 1 to 50 m/min. The gap between the roll 33A and roll 33B is usually 10 to 500 $\mu$m, preferably 30 to 300 $\mu$m. The roll surface temperature of the roll 33A is usually 0 to 200°C, preferably 20 to 150°C. The roll surface temperature of the roll 33B is usually 0 to 200°C, preferably 20 to 150°C. The linear pressure between the roll 33A and roll 33B is usually 0.01 to 10 kN/cm, preferably 0.02 to 5 kN/cm.

Above the roll 33A and roll 33B, a feeder 32A is provided for feeding composite particles for electrode 12. The composite particles for electrode 12 are fed from the feeder 32A between the rolls 33A and 33B.

Further, the long sheet-shaped support 30 is fed from the rolled member 31A and fed between the roll 33A and roll 33B so as to hug the roll 33A.

The roll 33A rotates counterclockwise and the roll 33B rotates clockwise, whereby the composite particles for electrode 12 are taken between the roll 33A and the sheet-shaped support 30 and the composite particles for electrode 12 are compressed. Due to this, a compressed powder layer on a long sheet-shaped support comprised of composite particles for electrode 12 deposited on a support 30 is formed.

Here, preferably the compressed powder layer (press formed layer) 400 is compressed so that its density becomes 100 to 10000% of the density of the composite particles for electrode 12, more preferably the compressed powder layer 400 is compressed so that its density becomes 200 to 1000% of the density of the composite particles for electrode 12. The density of the composite particles for electrode 12 is the loose bulk density.

Note that, the long sheet-shaped support 30 used in the present invention is a long sheet-shaped support for supporting a compressed powder layer 400.

As the material which forms the support 30, a plastic film, paper, etc. may be mentioned. Further, it is possible to use a film of a multilayer structure comprised of the above film which is laminated. Among these as well, from the viewpoint of general use and handling, paper or a thermoplastic resin film is preferable, and a thermoplastic resin film is more preferable. As the thermoplastic resin film, polytetrafluoroethylene (PTFE), PET (polyethyleneterephthalate) film, polyolefin-based film, PVA (polyvinyl alcohol) film, PVB (polyvinyl butyral film), or PVC (polyvinyl chloride) film may be mentioned. Among these as well, polytetrafluoroethylene (PTFE) is preferable.

The support 30 is preferably roughened on the surface, treated for release, and otherwise treated on the surface. As the method for roughening the surface, for example, the method of embossing the support surface; the method of sand blasting the support surface; the method of kneading a matte material into the material which forms the support; the method of coating a layer including a matte material on the support surface; etc. may be mentioned. Among these, the sandblasting method which can easily roughen the support surface is preferable.

As the method of release treatment, for example, the method of coating an alkyd resin or other thermosetting resin on the support and curing the same; the method of coating a silicone resin on the support and curing the same; the method of coating a fluorine resin on the support, etc. may be mentioned.

The surface treatment on the support may be performed on only one surface or on both surfaces.

The surface roughness Ra of the roughened surface of the support is preferably 0.1 to 5 $\mu$m, more preferably 0.2 to 3 $\mu$m in range. By the surface roughness of the roughened surface of the support being in this range, it becomes possible to obtain both adhesion between the compressed powder layer and support and peelability of the support when using the compressed powder layer on the support to produce an electrode.

The surface roughness Ra can be calculated based on JIS B 0601 by, for example, using a nanoscale hybrid microscope (VN-8010, made by Keyence), drawing a roughness curve, and using the formula shown below. In the following formula, L is the measured length while x is the deviation from the average line to the measurement curve.

$$\mathrm{R\,a} = \frac{1}{L} \int_{0}^{L} |\, f\,(x)\,|\, d\,x$$

The thickness of the support 30 is not particularly limited, but 10 to 200 $\mu$m is preferable, 20 to 150 $\mu$m is more preferable, 20 to 100 $\mu$m is particularly preferable. If the thickness of the support 30 is in the above range, the handling ability of the compressed powder layer on the long sheet-shaped support is improved. Further, the width is not particularly limited, but 100 to 1000 mm is preferable, while 100 to 500 mm is more preferable.

The tensile strength of the support 30 is not particularly limited, but is preferably 30 to 500 MPa, more preferably 30 to 300 MPa. If the tensile strength of the support 30 is in the above range, it is possible to prevent breakage of the compressed powder layer on the long sheet-shaped support. The tensile strength of the support 30 is measured based on JIS K 7127.

The long sheet-shaped support 30 is usually pulled out from the rolled member 31A and is wound up by the roll 36A etc. after the compressed powder layer 400 is transferred to the current collector 300. The wound up long sheet-shaped support 30 can be repeatedly used and the production cost of the electrode can be made lower.

Further, the long sheet-shaped support 30 may be made a seamless belt.

When repeatedly using a long sheet-shaped support 30 and when making the support a seamless belt, it is preferably cleaned before depositing the composite particles for electrode 12. The cleaning may be performed using, for example, a cleaner roll or vacuum blower.

Next, the compressed powder layer on the long sheet-shaped support is separated from the roll 33B and is sent to the the opposite side of the rolls in a manner hugging the roll 33A. The compressed powder layer 400 which was once compressed between the roll 33A and roll 33B recovers its thickness on the sheet-shaped support 30 by the release of the compression force. The recovery rate of the compressed powder layer 400 from the thickness at the time of application of the compression force at the compression point of the Q point and its vicinity to the thickness after release is preferably 100% to 5000%, more preferably 150% to 1000%. Here, the recovery rate of the compressed powder layer 400 is the value obtained by dividing the thickness of the compressed powder layer 400 after releasing the compression force by the thickness of the compressed powder layer when applying the compression force at the compression point, that is, the Q point, and its vicinity and multiplying it by 100. The thickness of the compressed powder layer 400 at the compression point, that is, the Q point, and its vicinity can be estimated from the thickness of the support 30 and the gap between the rolls 33A and 33B.

The density of the compressed powder layer 400 after recovery, that is, the density of the compressed powder layer 400 after the compressed powder layer forming step, is preferably 130% to 400% of the density of the composite particles for electrode 12, more preferably 150% to 300%.

Here, the compressed powder layer on the long sheet-shaped support is not rolled up to a rolled member but is used as it is for the next process. By not rolling it to a rolled member, it is possible to transfer the compressed powder layer 400 on to the current collector 300 at the next process while keeping the density of the compressed powder layer 400 low.

Note that, in the example shown in FIG. 6, separate from the above, a configuration for forming a compressed powder layer 400 on the surface of the long sheet-shaped support 30 in a similar way as the above under similar conditions (that is, a configuration comprised of the rolled member 31B of the support 30, feeder 32B, and pair of rolls 34A and 34B) is provided at the opposite side across the current collector 300.

Further, in this second example, the compressed powder layers 400 which are formed on the supports 30 are transferred to a long sheet-shaped current collector 300. Specifically, as shown in FIG. 6, the compressed powder layers on the sheet-shaped supports are conveyed along with rotation of the roll 33A and roll 34A while the long sheet-shaped ccurrent ollector 300 is introduced between these roll 33A and roll 34A and pressed to transfer the compressed powder layers 400 to the two surfaces of the sheet-shaped current collector 300 and obtain a laminate which is comprised of the compressed powder layers 400 and the current collector 300. Note that, as the sheet-shaped current collector 300, it is possible to use the one which is illustrated in the above-mentioned first example. Further, in the same way as the above-mentioned first example, it is possible to use one on which conductive adhesion layers are formed.

Here, the circumferential speed of the roll 33A is usually 0.1 to 100 m/min, preferably 1 to 50 m/min. The circumferential speed of the roll 34A is usually 0.1 to 100 m/min, preferably 1 to 50 m/min. The gap between the roll 33A and roll 34A is usually 60 to 700 $\mu$m, preferably 100 to 500 $\mu$m. The roll surface temperature of the roll 33A is usually 0 to 200°C, preferably 20 to 150°C. The roll surface temperature of the roll 34A is usually 0 to 200°C, preferably 20 to 150°C. The linear pressure between the roll 33A and the roll 34A is usually 0.01 to 10 kN/cm, preferably 0.05 to 1 kN/cm.

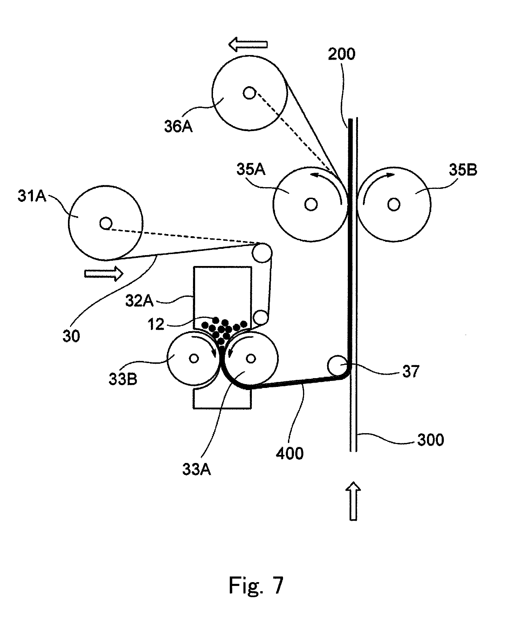

For the method of transferring the compressed powder layers 400 to the long sheet-shaped current collector 300, as explained above, the method of bringing the compressed powder layers 400 and the sheet-shaped current collector 300 into contact, and then pressing them by the rolls to press bond them, or then warming by an infrared heater, hot air, etc. or then cooling by cool air etc. may be employed. For example, as shown in FIG. 7, the compressed powder layers 400 of the compressed powder layers on the long sheet-shaped supports are made to contact the long sheet-shaped current collector 300 by the rolls 37, then are warmed by an infrared heater or hot air etc. or are cooled by cool air etc. Further, as shown in FIG. 7, by making the compressed powder layers on the long sheet-shaped supports a state where they are present alone and a state where there is no metal present, it is possible to easily detect foreign matter, measure the film thickness, and inspect for surface defects.

Next, in the second example, the laminate which is comprised of the compressed powder layers 400 and current collector 300 is further press formed. The compressed powder layers 400 are pressed and become the electrode active material layers 200.

In FIG. 6, the laminate comprised of the compressed powder layers 400 and current collector 300 is introduced between the roll 35A and roll 35B and pressed to form the electrode active material layers 200 on the two surfaces of the current collector 300. Further, the sheet-shaped supports 30 are taken up by the roll 36A and roll 36B and separated from the compressed powder layers 400.

The circumferential speed of the roll 35A is usually 0.1 to 100 m/min, preferably 1 to 50 m/min. The circumferential speed of the roll 35B is usually 0.1 to 100 m/min, preferably 1 to 50 m/min. The gap between the roll 35A and roll 35B is usually 60 to 700 $\mu$m, preferably 100 to 500 $\mu$m. The roll surface temperature of the roll 35A is usually 0 to 200°C, preferably 20 to 150°C. The roll surface temperature of the roll 35B is usually 0 to 200°C, preferably 20 to 150°C. The linear pressure which is applied between the roll 35A and the roll 35B is usually 0.01 to 10 kN/cm (1 to 1000 kN/m), preferably 0.02 to 5 kN/cm (2 to 500 kN/m). The roll diameters of the roll 35A and roll 35B can be determined in accordance with the pressure which is applied at the time of compressing the compressed powder layers 400, but is usually 50 to 1000 mm, preferably 100 to 500 mm. Further, in the second example as well, in the same way as the above-mentioned first example, when the compressed powder layers 400 are further compressed to form the electrode active materials layer 200, it is preferable to make the pressure one by which a shear force is applied to the compressed powder layers 400 at the time of compression (preferably 150 kN/m or more, more preferably 250 kN/m or more, furthermore preferably 300 kN/m or more). Due to this, it is possible to make the electrode active material layers 200 ones which have the above-mentioned microstructures.

The roll 35A and roll 35B may also be treated on the surface. For example, by providing relief shapes or other engraved shapes on the outer surfaces of the roll 35A and roll 35B, it is possible to form a pattern on the surface of an electrode for electrochemical device and change the roughness of the surface.

The thickness of the electrode active material layer 200 is usually 10 to 1000 $\mu$m, more preferably 20 to 500 $\mu$m.

According to such a second example (first method of production), it is possible to continuously produce an electrode for electrochemical device with a high electric capacity by a small-sized production facility.

In particular, the inventors discovered that by not rolling the compressed powder layer on the long sheet-shaped support into a rolled member but bonding it with a current collector, it is possible to continuously produce a high electric capacity electrode for electrochemical device by a small-sized production facility. This second example (first method of production) was based on this discovery.

(Method of Production of Electrode for Electrochemical Device 100 According to Third Example)

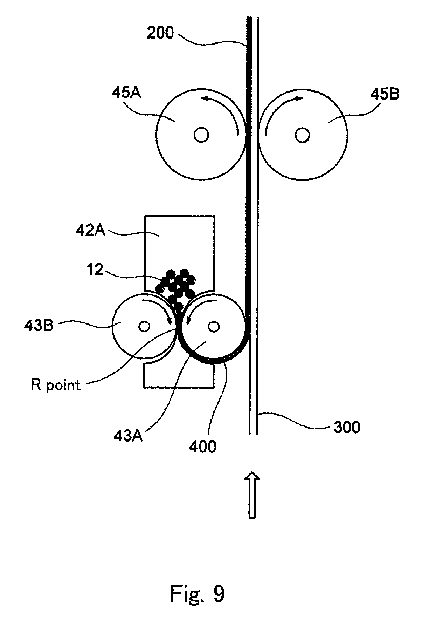

Next, a method of production of an electrode for electrochemical device 100 according to a third example will be explained. FIG. 9 is a schematic view which shows an electrode forming apparatus for an electrode for electrochemical device 100 of the present invention producing according to the third example.

The rolls which are used in this example are pairs of rolls which rotate in opposite directions such as the roll 43A and roll 43B which are shown in FIG. 9.

Above the roll 43A and roll 43B, a feeder 42A is provided for feeding the composite particles for electrode 12. The feeder 42A feeds the composite particles between the roll 43A and 43B.

The roll 43A rotates counterclockwise, while the roll 43B rotates clockwise.

The circumferential speed of the roll 43A is usually 0.1 to 100 m/min, preferably 1 to 50 m/min. The circumferential speed of the roll 43B is usually 0.1 to 100 m/min, preferably 1 to 50 m/min. The gap between the roll 43A and roll 43B is usually 10 to 500 $\mu$m, preferably 30 to 300 $\mu$m. The roll surface temperature of the roll 43A is usually 0 to 200°C, preferably 20 to 150°C. The roll surface temperature of the roll 43B is usually 0 to 200°C, preferably 20 to 150°C. The pressure which is applied between the roll 43A and roll 43B is usually 0.01 to 10 kN/cm, preferably 0.02 to 5 kN/cm.

By the roll 43A rotating counterclockwise and the roll 43B rotating clockwise, the composite particles for electrode 12 are taken in whereupon the composite particles for electrode 12 are compressed and made to deposit on the roll 43A.

The method of compressing the composite particles for electrode 12 to make them deposit on one roll surface is not particularly limited, but a difference in the deposition ability is created between the properties of the outer circumferential surfaces of the roll 43A and roll 43B particularly. For example, a difference may be created by matting, roughening, plating, surface engraving, mold release, mirror surface finishing, delustering, and other surface treatment. For example, the roll 43B is preferably made a mirror surface and the roll 43A matted. By surface treatment of the roll 43A and roll 43B, it is possible to control the intake amount of the composite particles for electrode 12 and, as explained later, change the thickness of the obtained electrode active material layer 200 after passing between the rolls 45A and 45B. Further, from the viewpoint of the adhesion with the compressed powder layer 400 which is obtained by compression by the rolls 43A and 43B, the surface of the roll 43A may be continuously sandblasted to roughen it.

Further, as the method of creating a difference in the deposition ability at the roll 43A and roll 43B, in addition to the above method, it is possible to create a difference between the roll 43A and roll 43B by using materials which differ in the electric conductivity, heat conductivity, dissipation rate, heat absorption rate, etc.

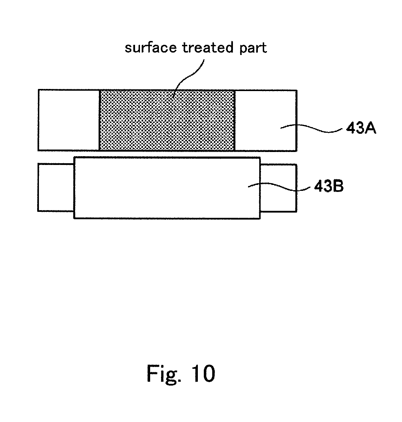

Here, FIG. 10 is a schematic view which shows the surface conditions of the roll 43A and roll 43B and is a view of the surfaces of the roll 43A and roll 43B seen from the feeder 42A side. For this reason, in FIG. 10, the lateral direction in the figure corresponds to the width directions of the rolls 43A and 43B, while the longitudinal direction in the figure corresponds to the circumferential direction of the rolls 43A and 43B. Further, in the present example, the surface treatment of the roll 43A, as shown in FIG. 10, is preferably surface treatment other than at the end parts in the width direction. Further, in such a case, a device may be provided for removing from the roll 43A or roll 43B the composite particles for electrode 12 which were compressed by the not surface treated parts at the time of compression.

As other methods for making the composite particles for electrode 12 deposit on one roll surface, for example, the method of making the rotational speeds of the roll 43A and roll 43B different, the method of making the diameters of the roll 43A and roll 43B different, etc. may be mentioned.

Here, at the roll 43A and roll 43B, the compressed powder layer 400 is preferably compressed so its density becomes 100 to 10000% of the density of the composite particles for electrode 12, more preferably is compressed so it becomes 200 to 1000%. The density of the composite particles for electrode 12 is the loose bulk density.

The compressed powder layer 400 which is compressed between the roll 43A and the roll 43B once recovers its thickness on the roll 43A by the release of the compression force. The recovery rate of the compressed powder layer 400 from the thickness at the time of application of the compression force at the compression point of the R point and its vicinity to the thickness after release is preferably 100% to 5000%, more preferably 150 to 1000%. Here, the recovery rate of the compressed powder layer 400 is the value obtained by dividing the thickness of the compressed powder layer 400 after releasing the compression force by the thickness of the compressed powder layer 400 when applying the compression force at the compression point of the R point and its vicinity and multiplying it by 100. The thickness of the compressed powder layer 400 at the compression point of the R point and its vicinity can be estimated from the gap of the rolls 43A and 43B etc.

The density of the compressed powder layer 400 after recovery, that is, the density of the compressed powder layer 400 which is deposited on the roll, is preferably 130% to 400% of the density of the composite particles for electrode 12, more preferably 150% to 300%. For example, if compressing composite particles for electrode 12 with a loose bulk density of 0.45 g/cc by the roll 43A and roll 43B, the density of the compressed powder layer 400 becomes 0.75 g/cc.

The roll 43A and roll 43B may be provided with a cleaning mechanism in front of the feeder 42A for feeding composite particles for electrode 12 so as to remove composite particles for electrode 12 which have deposited on the roll surfaces. Further, at the downstream sides of the compressing parts of the roll 43A and roll 43B, a mechanism may be provided for recovering the composite particles for electrode 12 which did not contribute to formation of the compressed powder layer 400.

Next, in the third example, the compressed powder layer 400 which is deposited on the roll 43A is transferred to the long sheet-shaped current collector 300. This transfer may be performed by the method of bringing the compressed powder layer 400 and sheet-shaped current collector 300 into contact and then pressing them by the rolls to press bond them, or then warming by an infrared heater, hot air, etc. or then cooling by cool air etc. may be employed. Note that, as the sheet-shaped current collector 300, it is possible to use the one which is illustrated in the above-mentioned first example. Further, in the same way as the above-mentioned first example, it is possible to use one which is formed with an conductive adhesion layer. Furthermore, when using the method of pressing by rolls to press bond the layer, it is preferable to provide a backup roll for pressing use at the opposite side from the roll 43A across the sheet-shaped current collector 300.

Next, in the third example, the laminate comprised of the compressed powder layer 400 and the current collector 300 is further press-formed. The compressed powder layer 400 is pressed and becomes the electrode active material layer 200.

That is, as shown in FIG. 9, the compressed powder layer 400 is pressed between the roll 45A and roll 45B and becomes the electrode active material layer 200.

The roll 45A rotates counterclockwise, while the roll 45B rotates clockwise. The circumferential speed of the roll 45A is usually 0.1 to 100 m/min, preferably 1 to 50 m/min. The circumferential speed of the roll 45B is usually 0.1 to 100 m/min, preferably 1 to 50 m/min. The gap between the roll 45A and roll 45B is usually 60 to 700 $\mu$m, preferably 100 to 500 $\mu$m. The roll surface temperature of the roll 45A is usually 0 to 200°C, preferably 20 to 150°C. The roll surface temperature of the roll 45B is usually 0 to 200°C, preferably 20 to 150°C. The roll diameters of the roll 45A and roll 45B may be determined in accordance with the pressure which is applied when compressing the compressed powder layer 400, but is usually 50 to 1000 mm, preferably 100 to 500 mm. The pressure which is applied between the roll 45A and roll 45B is usually 0.01 to 10 kN/cm (1 to 1000 kN/m), preferably 0.02 to 5 kN/cm (2 to 500 kN/m). The pressure which is applied between the roll 45A and roll 45B is larger than the pressure which is applied between the roll 43A and roll 43B. Further, in the third example as well, in the same way as the above-mentioned first example, when further compressing the compressed powder layer 400 to form the electrode active material layer 200, the pressure is preferably made one where a shear force is applied to the compressed powder layer 400 at the time of compression (preferably 150 kN/m or more, more preferably 250 kN/m or more, furthermore preferably 300 kN/m or more). Due to this, it is possible to make the electrode active material layer 200 one which has the above-mentioned microstructure.

The roll 35A and roll 35B may be treated on their surfaces. For example, by providing relief shapes or other engraved shapes on the outer surfaces of the roll 35A and roll 35B, it is possible to form a pattern on the surface of an electrode for electrochemical device and change the roughness of the surface.

The electrode active material layer 200 has a higher density than the compressed powder layer 400, while the compressed powder layer 400 has a higher density than the composite particles for electrode 12.

The thickness of the electrode active material layer 200 is usually 10 to 1000 $\mu$m, more preferably 20 to 500 $\mu$m.

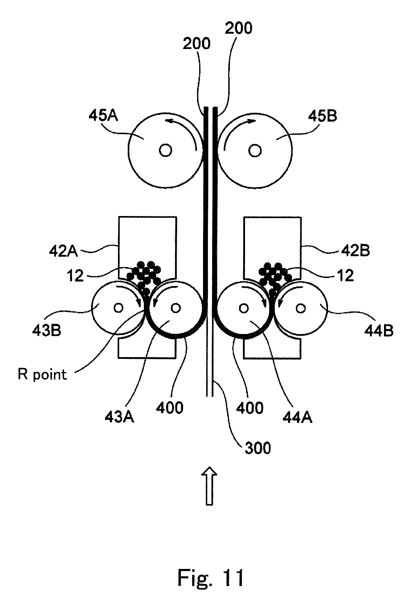

Further, FIG. 11 is a view which shows another embodiment of the third example. In the embodiment shown in FIG. 11, in addition to the configuration for forming the compressed powder layer 400 on the above-mentioned roll 43A, at the opposite side across the current collector 300, a configuration for forming the compressed powder layer 400 on the roll 44A in a similar way to the above under similar conditions (that is, the configuration comprised of the feeder 42B and pair of rolls 44A and 44B) is provided. Further, in the embodiment shown in this FIG. 11, the compressed powder layers 400 which are formed on the roll 43A and the roll 44A are simultaneously transferred to the two surfaces of the current collector 300 by running the current collector 300 between the roll 43A and roll 44A and pressing the compressed powder layers 400.

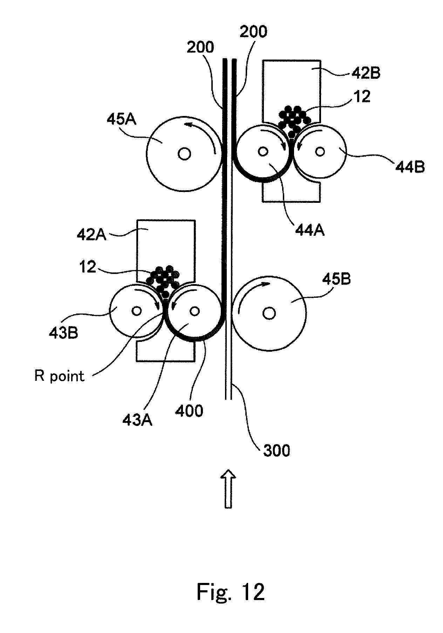

Alternatively, FIG. 12 is a view which shows further another embodiment of the third example. In the embodiment shown in FIG. 12, the configuration for forming the compressed powder layers 400 on the roll 45B and the roll 44A in the configuration shown in FIG. 11 (that is, the configuration comprised of the feeder 42B and the pair of rolls 44A and 44B) is arranged in reverse. Further, in the embodiment shown in this FIG. 12, the current collector 300 is passed between the roll 43A and roll 45B so as to transfer the compressed powder layer 400 which is formed on the roll 43A to the current collector 300 and press these, then the electrode active material layer 200 is formed on one surface of the current collector 300. Next, the current collector 300 which has the electrode active material layer 200 formed on one surface is passed between the roll 44A and roll 45A so as to transfer the compressed powder layer 400 which is formed on the roll 44A to the surface of the current collector 300 where the electrode active material layer 200 is not formed and press these, then the electrode active material layer 200 is formed on the other surface of the current collector 300.

According to this third example (second method of production), it is possible to provide a method of continuously producing a high electric capacity electrode for electrochemical device by a small-sized production facility at a low cost.

In particular, the inventors discovered that by compressing the composite particle powder to make it deposit on a roll surface, no support is required, continuous production becomes possible, the production facility can be made small in size, and a high electric capacity electrode for electrochemical device is obtained. The third example (second method of production) was based on this discovery.

(Method of Production of Electrode for Electrochemical Device 100 According to Fourth Example)

Next, the method of production of the electrode for electrochemical device 100 according to the fourth example will be explained.

In the fourth example, first, the composite particles for electrode are compressed to discontinuously form the compressed powder layer at the support surface.

As the method for compressing the composite particles for electrode to form a compressed powder layer, the method of pressing between a support roll and another roll, or the method of introducing a support belt or support film between a pair of rolls and pressing between the rolls and support belt or support film may be mentioned. As the method for discontinuously forming the compressed powder layer, the method of intermittently providing parts different in properties from other parts on the support surface may be mentioned. The part of the support surface on which the compressed powder layer is formed may be provided in a strip in the direction perpendicular to the flow direction of the support. The width may be suitably set. For example, one roll surface is made one where it is difficult for the compressed powder layer to deposit, while the other roll surface is provided with parts at which the compressed powder layer deposits and parts where it does not deposit. The deposition property may be made different by the roughness, tackiness, temperature, material, and other properties of the support surface. For example, a difference may be created by matting, sandblasting, and other roughening, plating, surface engraving, release treatment, mirror surface finishing, delustering, and other surface treatment. Further, it is possible to use materials with different electric conductivities, thermal conductivities, dissipation rates, and heat absorption rates to create the difference.

For example, by providing a roughened part and a non-roughened part at the support surface alternately in the flow direction, a compressed powder layer will be formed at the roughened parts.

The support used in the fourth example is used to compress the composite particles for electrode at its surface to form a compressed powder layer and transfer that compressed powder layer to a long sheet-shaped current collector.

As the support, a support roll, endless support belt, long support sheet, etc. may be mentioned.

As the material which forms the support, a resin, paper, fiber, rubber, metal, etc. may be mentioned.

The material which forms the support rolls is preferably a metal. Further, the material which forms the support belt and the long support sheet is preferably a resin. As the resin, a polytetrafluoroethylene (PTFE), PET (polyethyleneterephthalate) film, polyolefin-based film, PVA (polyvinyl alcohol) film, PVB (polyvinyl butyral film), or PVC (polyvinyl chloride) film may be mentioned. Among these, polytetrafluoroethylene (PTFE) is preferable.

Further, the support may be a multilayer structure which is comprised of layers formed by these materials stacked together.

When the support is a roll or an endless belt or when a long sheet is repeatedly used, the support is preferably cleaned before making the powder of the composite particles deposit on it. The cleaning may be performed using, for example, a cleaner roll or vacuum blower.

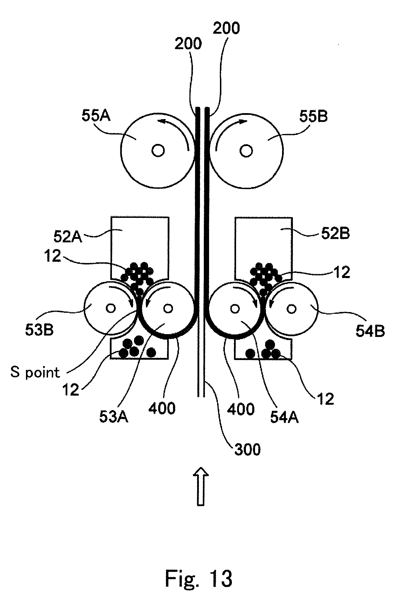

FIG. 13 is a schematic view which shows an electrode forming apparatus for producing an electrode for electrochemical device 100 of the present invention according to the fourth example.

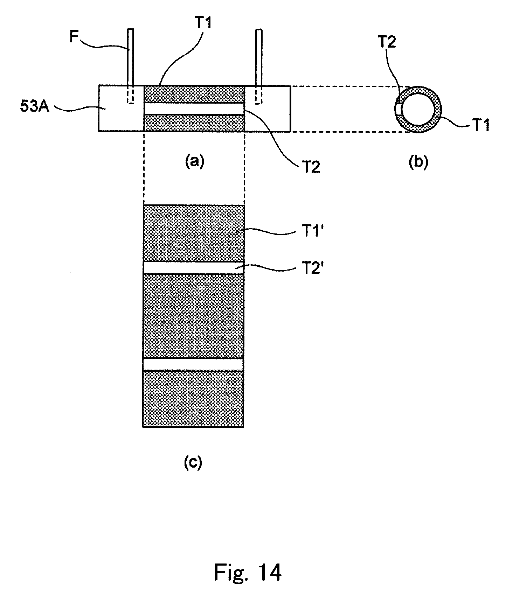

In FIG. 13, composite particles for electrode 12 are fed between a pair of rolls 53A and 53B which rotate in opposite directions from a feeder 52A and the composite particles for electrode 12 are compressed. The roll 53B is given a mirror surface. The roll 53A is treated on its surface, as shown in FIG. 14(a), to roughen it at a T1 part and is given a mirror surface at a T2 part. Here, FIG. 14(a) is a schematic view which shows the surface of the roll 53A, while FIG. 14(b) is a side view of the roll 53A seen from the axial direction. In FIG. 14(b), the part of the surface which is roughened (T1 part) and the part which is given a mirror surface (T2 part) are shown differentiated from each other. As shown in this FIG. 14(a) and FIG. 14(b), the roll 53A is formed with a part which is given a mirror surface (T2 part) at part in the circumferential direction while the other part is a roughened part (T1 part). By configuring the roll in this way, the compressed powder layer 200 which is formed between the rolls 53A and 53B remains deposited on the roll 53A at the T1 part, but is peeled off or deposits at the roll 53B side at the T2 part. Further, due to this, as shown in FIG. 14(c), at the part corresponding to the T1 part of the roll 53A, that is, the T1' part, a compressed powder layer 400 is formed, while at the part corresponding to the T2 part of the roll 53A, that is, the T2' part, no compressed powder layer 400 is formed. Note that, FIG. 14(c) is a schematic view which shows a discontinuous compressed powder layer 400 which is formed in the present example.

Here, the compressed powder layer 400 is preferably compressed to a density of 100 to 10000% of the density of the composite particles for electrode 12, more preferably the compressed powder layer 400 is compressed to a density of 200 to 1000% of the density of the composite particles for electrode 12. The density of the composite particles for electrode 12 means the loose bulk density.

The compressed powder layer 400 which is compressed between the roll 53A and the roll 53B recovers its thickness on the roll 43A by the release of the compression force. The recovery rate of the compressed powder layer 400 from the thickness at the time of application of the compression force at the compression point, that is, the S point, and its vicinity to the thickness after release is preferably 100% to 5000%, more preferably 150 to 1000%. Here, the recovery rate of the compressed powder layer 400 is the value obtained by dividing the thickness of the compressed powder layer 400 after releasing the compression force by the thickness of the compressed powder layer 400 when applying the compression force at the compression point, that is, the S point, and its vicinity and multiplying it by 100. The thickness of the compressed powder layer 400 at the S point and its vicinity can be estimated from the gap between the rolls 53A and 53B.

The density of the compressed powder layer 400 after recovery, that is, the density of the compressed powder layer 400 after the compressed powder layer forming process is preferably 130% to 400% of the density of the composite particles for electrode 12, more preferably 150 to 300%.

As another method of discontinuously forming the compressed powder layer 400, in addition to the method of providing a difference in the adhesion of the support surface (roll 53A surface) in the above way, the method of providing recesses at the parts where the compressed powder layer 400 should not be formed and otherwise providing step differences at the support (roll 53A surface) also may be mentioned. In this case, at the recessed parts, the composite particles for electrode 12 are weakly compressed, so a compressed powder layer 400 is not formed and the powder drops down.

Note that, in the example shown in FIG. 13, separate from the above, at the opposite side across the current collector 300, a configuration is provided for discontinuously forming a compressed powder layer 400 on the rolls 54 in a similar way to the above under similar conditions (that is, a configuration comprised of the feeder 52B and the pair of rolls 54A, 54B). Note that, the roll 54A, like the above-mentioned roll 53A, is roughened at the T1 part and is given a mirror finish at the T2 part (see FIG. 14(a) and FIG. 14(b)). Further, the roll 54B is given a mirror finish at the surface in the same way as the above-mentioned roll 53B.

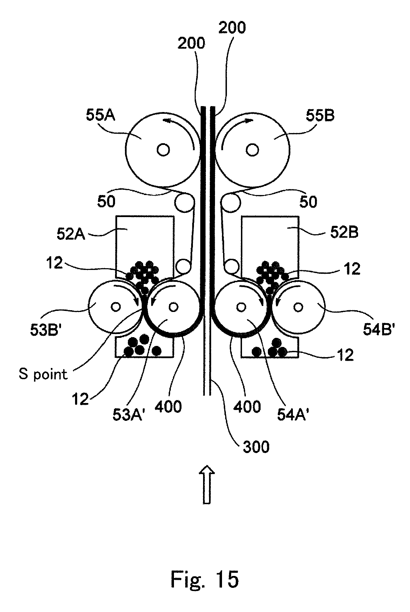

FIG. 15 is a view which shows another embodiment of the fourth example. In FIG. 15, as the support, instead of support rolls (instead of making the rolls 53A and 54A the support), the embodiment of use of support belts 50 is shown. In this embodiment, the treatment which was applied to the surfaces of the rolls 53A and 54A in the above-mentioned FIG. 13 is performed on the support belt surfaces.

Above the roll 53A' and roll 53B', a feeder 52A is provided. The composite particles for electrode 12 are fed from the feeder 52A between the rolls 53A' and 53B'. Further, a support belt 50 is fed between the roll 53A' and the roll 53B' so as to hug the roll 53A'.

The roll 53A' rotating counterclockwise and the roll 53B' rotating clockwise, whereby the composite particles for electrode 12 are taken between the roll 53A' and support belt 50 and the composite particles for electrode 12 are compressed. Due to this, the support belt 50 is formed with a compressed powder layer on which the compressed powder layer 400 is discontinuously deposited.

Here, it is preferable to compress the compressed powder layer 400 to a density of 130% to 400% of the density of the composite particles for electrode 12 and more preferable to compress the compressed powder layer 400 to a density of 150 to 300% of the density of the composite particles for electrode 12.

Next, the compressed powder layer 400 which is deposited on the support belt 50 is separated from the roll 53B' and sent to the opposite side of the rolls so as to hug the roll 53A'. The thickness of the compressed powder layer 400 is restored from the time of compression. The recovery rate of the compressed powder layer 400 from the thickness at the time of application of the compression force at the compression point, that is, the S point, and its vicinity to the thickness after release is preferably 100% to 1000%, more preferably 150% to 400%. Here, the recovery rate of the compressed powder layer 400 is the value obtained by dividing the thickness of the compressed powder layer 400 after releasing the compression force by the thickness of the compressed powder layer 400 when applying the compression force at the compression point, that is, the S point, and its vicinity and multiplying it by 100. The thickness of the compressed powder layer 400 can be estimated from the thickness of the support belt 50 and the gap between the rolls 53A' and 53B'.

The density of the compressed powder layer 400 after recovery is preferably 130% to 400% of the density of the composite particles for electrode 12, more preferably 150% to 300%.

Next, the compressed powder layers 400 which are discontinuously formed on the support surfaces (rolls 53A and 54A or support belts 50) are transferred to the long sheet-shaped current collector 300 to form a sheet-shaped current collector 300 which has discontinuous compressed powder layers 400 in the flow direction. As the method of transferring the compressed powder layers 400 to the current collector 300, the method of bringing the compressed powder layers 400 and current collector 300 into contact and then pressing them by rolls to press bond the layers, the method of bringing the compressed powder layers 400 and current collector 300 into contact and then heating them by an infrared heater, hot air, etc., or then cooling by cool air may be mentioned. Note that, as the sheet-shaped current collector 300, it is possible to use the one which is illustrated in the above-mentioned first example. Further, in the same way as the above-mentioned first example, it is possible to use one which is formed with conductive adhesion layers.

In FIG. 13, the compressed powder layers 400 which are formed discontinuously at the rolls 53A and 54A are moved while deposited on the rolls 53A and 54A and pressed on the long sheet-shaped current collector 300 which is supplied from below side, between the roll 53A and the support roll 54A so as to be transferred to the two surfaces of the current collector 300. That is, as shown in FIG. 14(c), the layers are transferred so that the compressed powder layers 400 are formed at the T1' parts, while the compressed powder layers 400 are not formed at the T2' parts. Note that, in the present example, the compressed powder layer 400 which is formed by the rolls 53A and 53B and the compressed powder layer 400 which is formed by the rolls 54A and 54B may be made forms in which the non-formed parts where the compressed powder layers 400 are not formed (that is, in FIG. 14(c), the T2' parts) arrive at the same positions as each other or may be made forms in which they arrive at different positions from each other, but from the viewpoint of the workability when made into an electrode for electrochemical device etc., it is preferable to make them a form where they arrive at the same positions.

In FIG. 15, the long sheet-shaped current collector 300 is introduced between the roll 53A' and roll 54A' and pressed to transfer the compressed powder layers 400 from the support belts 50 to the two surfaces of the sheet-shaped current collector 300 and obtain a laminate comprised of the compressed powder layers 400 formed at the two surfaces and a current collector. In FIG. 15, discontinuous compressed powder layers 400 are transferred to the two surfaces of the long sheet-shaped current collector 300 in the flow direction.

Next, in the fourth example, the sheet-shaped current collector 300 which has discontinuous compressed powder layers 400 which were obtained in the above way are further press formed. The compressed powder layers 400 are pressed and become the electrode active material layers 200.

In FIG. 13, the laminate comprised of the compressed powder layers 400 and the current collector 300 is introduced between the roll 55A and roll 55B and pressed.

Further, in FIG. 15 as well, in the same way, the laminate comprised of the compressed powder layers 400 and the current collector 300 is introduced between the roll 55A and roll 55B and pressed. Note that, in FIG. 15, the support belts 50 are separated from the electrode active material layer 200 by the roll 55A and roll 55B. Further, in the fourth example as well, in the same way as the above-mentioned first example, when further compressing the compressed powder layers 400 and forming the electrode active material layers 200, at the time of compression, a pressure is preferably applied so that a shear force acts on the compressed powder layers 400 (preferably 150 kN/m or more, more preferably 250 kN/m or more, furhtermore preferably 300 kN/m or more). Due to this, it is possible to make the electrode active material layers 200 ones having the above-mentioned microstructure.

The thickness of the electrode active material layers 200 is usually 10 to 1000 $\mu$m, more preferably 20 to 500 $\mu$m.

Such a long sheet-shaped current collector which has discontinuous electrode active material layers in the flow direction can be cut at a part with no electrode active material layers to form a tab part and obtain an electrode part for electrochemical device. Since the cut part has no electrode active material layers, this is effective for preventing cutting loss and preventing a drop in strength and deformation of the cut ends.

According to this fourth example (third method of production), it is possible to continuously produce an electrode for electrochemical device which has a tab part by a small-sized production facility while preventing cutting loss and a drop in strength at the cut ends and holding down costs.

In particular, the inventors discovered that by continuously forming compressed powder layers on support surfaces, transferring these to a long sheet-shaped current collector, and pressing them, a long sheet with electrode active material layers which are made to be discontinuously formed in the flow direction is obtained and that vy cutting that long sheet at parts with no electrode active material layers, it is possible to produce an electrode for electrochemical device which has a tab part while preventing cutting loss and a drop in strength at the cut ends. The fourth example (third method of production) was made based on this discovery.

EXAMPLES

Below, examples and comparative examples will be given to more specifically explain the present invention. In the examples, the "parts" and "%" are based on weight unless otherwise indicated.

Note that, the definitions and methods of evaluation of the properties are as follows.

<Bulk Density of Composite Particles for Electrode>

The bulk density of the composite particles for electrode was measured using a Powder Tester "PT-S" (made by Hosokawa Micron). Specifically, composite particles for electrode were placed on a sieve of a mesh of 250 $\mu$m. This was made to vibrate by 1 kHz to make the composite particles for electrode udrop and fill a 100 cc measuring cup. The weight (g) of the composite particles for electrode which filled the measuring cup was divided by the volume (cc) of the measuring cup to obtain the bulk density (g/cc) of the composite particles for electrode.

<Microstructure of Electrode>

The cross-section of the negative electrode which was obtained in each of the examples and comparative examples was examined using a scan type electron microscope (product name: "S4700", made by Hitachi Ltd.). The following criteria were used to evaluate the microstructure of the obtained negative electrode.

A: As shown in FIG. 2, presence of structures where the binder-covered parts 220 which cover mutually adjoining pluralities of particles of electrode active material 210 are connected by the binder-connecting parts 230.

E: As shown in FIG. 3 and FIG. 4, structures where the spaces which are formed by the mutually adjoining pluralities of particles of electrode active material 210 are completely enclosed by the binder 220a.

<Peel Strength>

The negative electrode which were obtained in each of the examples and comparative examples was cut into a width 1 cm $\times$ length 10 cm rectangle for use as a test piece and was fastened with the negative electrode active material layer surface facing up. Cellophane tape was attached to the surface of the negative electrode active material layer, the cellophane tape was pulled off from one end of the test piece at a speed of 50 mm/min in a 180° direction, and the stress at that time was measured. Further, this measurement was performed 10 times, the average value was found, and that was used as the peel strength. This was judged by the following criteria. Note that, the larger the peel strength, the higher the adhesion strength in the negative electrode active material layer and adhesion strength between the negative electrode active material layer and current collector that can be judged.

A: Peel strength of 8 N/m or more
B: Peel strength of 6 N/m to less than 8 N/m
C: Peel strength of 4 N/m to less than 6 N/m
D: Peel strength of 2 N/m to less than 4 N/m
E: Peel strength of less than 2N/m

<Electrolytic Solution Wettability>
Using the negative electrode which was obtained in each of the examples and comparative examples, an electrolytic solution (solvent:ethylene carbonate/ethylmethyl carbonate = 3/7 (weight ratio), electrolyte: 1M LiPF$_6$ (made by Kishida Chemical)): 3 $\mu$L was dropped on the negative electrode active material layer. The time until the liquid drop permeated to the inside of the negative electrode active material layer and disappeared was measured to measure the wettability with respect to the electrolytic solution. This was judged by the following criteria.

A: Less than 30 seconds
B: 30 seconds to less than 45 seconds
C: 45 seconds to less than 60 seconds
D: 60 seconds to less than 120 seconds
E: 120 seconds or more

<Internal Resistance>
The coin type lithium ion secondary cell which was obtained in each of the examples and comparative examples was charged at 25°C up to 4.2V by the constant current method by a charging rate of 0.2C, then was charged at a constant voltage by the rated voltage. After that, it was discharged down to 3.0V by a discharge rate of 0.2C. The amount of voltage drop 10 seconds after the start of discharge was designated as ΔV. Further, the discharge rate was changed from 0.2C to 10C to similarly measure the amount of voltage drop ΔV. The discharge current value I (A) and the amount of voltage drop ΔV (V) were plotted, and the slant of the line was used as the internal resistance. This was judged by the following criteria.

A: Internal resistance of less than 3.0Ω
B: Internal resistance of 3.0Ω to less than 3.5Ω
C: Internal resistance of 3.5Ω to less than 4.0Ω
D: Internal resistance of 4.0Ω to less than 4.5Ω
E: Internal resistance of 4.5Ω or more

<Charging/Discharging Cycle Characteristics>

The coin type lithium ion secondary cell which was obtained in each of the examples and comparative examples was charged until 4.2V by a constant current and constant voltage charging method at 60°C by 0.5C. After that, it was charged by a constant voltage then discharged by a constant current of 0.5C until 3.0V for a charging/discharging cycle test. The charging/discharging cycle test was performed for 100 cycles and the ratio of the discharge capacity of the 100th cycle to the initial discharge capacity was made the capacity retention rate. This was judged by the following criteria. The larger the value, the smaller the decrease in capacity due to the repeated charging and discharging.

A: Capacity retention rate of 90% or more
B: Capacity retention rate of 80% to less than 90%
C: Capacity retention rate of 70% to less than 80%
D: Capacity retention rate of 60% to less than 70%
E: Capacity retention rate of less than 60%

(Example 1)

<Production of Slurry for Forming Conductive Adhesion Layer>

Volume average particle size 0.7 μm carbon black 100 parts, a dispersant constituted by an ammonium salt of carboxymethyl cellulose in a 4.0% aqueous solution (DN-10L; made by Daicel Corporation) 4 parts equivalent in solid content, a resin ingredient (binder) constituted by a number average particle size 0.25 μm acrylate polymer (2-ethylhexyl acrylate:acrylonitrile = 75:25 (mass ratio)) in a 40% aqueous dispersion 8 parts equivalent in solid content, and ion exchanged water were mixed to give a total solid content concentration of 30% and prepare a slurry for forming an conductive adhesion layer.

<Production of Composite Particles for Negative Electrode >

A negative electrode active material constituted by graphite 100 parts, a binder constituted by a styrene-butadiene copolymer (BM-480B, glass transition temperature -15°C; made by Zeon Corporation) in a 40% aqueous dispersion 2 parts equivalent in solid content, and a dispersant constituted by a sodium salt of carboxymethyl cellulose in a 0.8% aqueous solution (BSH-12; made by Dai-ichi Kogyo Seiyaku) 0.7 part equivalent in solid content, and a solvent constituted by water 100 parts were added and mixed while stirring by a "TK Homomixer" (made by Primix) to obtain a solid content concentration 35% slurry for negative electrode. Next, the obtained slurry for negative electrode was granulated by spray drying using a spray dryer (OC-16; made by Ohkawahara Kakohki) under conditions of a rotational speed of the rotary disk type atomizer (vane type, diameter 65 mm) of 25,000 rpm, a hot air temperature of 150°C, and a temperature of the particle recovery outlet of 90°C to obtain composite particles for negative electrode. The obtained composite particles for negative electrode had a weight average particle size of 78 μm and a bulk density of 0.40 g/cc.

<Production of Negative Electrode>

A current collector comprised of thickness 20 μm copper foil was coated with the slurry for forming conductive adhesion layer which was prepared above. This was dried at 120°C for 10 minutes to form a thickness 4 μm conductive adhesion layer on the copper foil.
Next, the above obtained composite particles for negative electrode and the copper foil on which conductive adhesion layer were formed was used by the electrode forming apparatus 2 shown in FIG. 5 to form a negative electrode active material layer on the copper foil on which conductive adhesion layer were formed to obtain a negative electrode.

Note that, in the electrode forming apparatus 2 shown in FIG. 5, the rolls 6A and 6B which form the pre-forming rolls 6 were ones with roll diameters of 50 mm, a roll gap of 50 $\mu$m, and a roll pressure (linear pressure) of 15 kN/m, while the rolls 8A and 8B which form the forming rolls 8 were ones with roll diameters of 250 mm, a roll gap of 50 $\mu$m, a roll pressure (linear pressure) of 350 kN/m, and a roll temperature of 100°C. The obtained negative electrode active material layer had an average density of 1.5 g/cm$^3$ and an average thickness of 95 $\mu$m. Further, the sheet-shaped pre-formed member 14 which passed through the rolls 6A and 6B which form the pre-forming rolls 6 had an average density of 0.8 g/cm$^3$.

Further, the obtained negative electrode was used to evaluate the microstructure of the electrode, peel strength, and electrolytic solution wettability. The results are shown in Table 1.

<Production of Composite Particles for Positive Electrode>

A positive electrode active material constituted by LiCoO$_2$, 100 parts, a binder constituted by an acrylate polymer (butyl acrylate:methyl methacrylate:itaconic acid = 80:15:5 (mass ratio), glass transition temperature -28°C, number average particle size 0.3 $\mu$m) in a 40% aqueous dispersion 1 part equivalent in solid content, a conductive material constituted by average particle size 0.7 $\mu$m acetylene black (Denka Black Powder; made by Denki Kagaku Kogyo) 5 parts, a dispersant constituted by a sodium salt of carboxymethyl cellulose in a 2.0% aqueous solution (BS-H; made by Dai-ichi Kogyo Seiyaku) 0.8 part equivalent in solid content, and a solvent constituted by water 85.0 parts were added and mixed while stirring by a "TK Homomixer" (made by Primix) to obtain a solid content concentration 45% slurry for positive electrode. Further, the obtained slurry for positive electrode was granulated by spray drying using a spray dryer (OC-16; made by Ohkawahara Kakohki) under conditions of a rotational speed of the rotary disk type atomizer (vane type, diameter 65 mm) of 25,000 rpm, a hot air temperature of 150°C, and a temperature of the particle recovery outlet of 90°C to obtain composite particles for positive electrode. The obtained composite particles for positive electrode had a weight average particle size of 54 $\mu$m and a bulk density of 0.90 g/cc.

<Production of Positive Electrode>

A current collector comprised of thickness 20 $\mu$m aluminum foil was coated with the slurry for forming conductive adhesion layer which was prepared above. This was dried at 120°C for 10 minutes to form a thickness 4 $\mu$m conductive adhesion layer on the aluminum foil.

Next, the above obtained composite particles for positive electrode and the aluminum foil on which the aconductive adhesion layer were formed was used by the electrode forming apparatus 2 shown in FIG. 5 to form a positive electrode active material layer on aluminum foil on which the aconductive adhesion layer were formed and thereby obtain a positive electrode. Note that, in the electrode forming apparatus 2 shown in FIG. 5, the rolls 6A and 6B which form the pre-forming rolls 6 were made ones with roll diameters of 50 mm, a roll gap of 50 $\mu$m, and a roll pressure (linear pressure) of 15 kN/m, while the rolls 8A and 8B which form the forming rolls 8 were made ones with roll diameters of 250 mm, a roll gap of 50 $\mu$m, a roll pressure (linear pressure of 400 kN/m, and a roll temperature of 100°C. The obtained negative electrode active material layer had an average density of 3.50 g/cm$^3$ and an average thickness of 100 $\mu$m. Further, the sheet-shaped pre-formed member 14 which passed through the rolls 6A and 6B which form the pre-forming rolls 6 had an average density of 1.8 g/cm$^3$.

<Production of Lithium Ion Secondary Cell>

The above prepared negative electrode and positive electrode were cut out so that parts where the active material layers were not formed were a vertical 2 cm × horizontal 2 cm and the parts where the active material layers were formed were a vertical 5.2 cm × horizontal 5.2 cm in the case of the negative electrode and a vertical 5 cm × horizontal 5 cm in the case of the positive electrode (parts where the active material layers were not formed being formed as shapes extending as is from single sides of the squares of the parts where the active material layers were formed). Further, the thus cut out negative electrode was provided with a tab member comprised of nickel (vertical 7 cm × horizontal 1 cm × thickness 0.01 cm) and, further, the positive electrode was provided with a tab member comprised of aluminum (vertical 7 cm × horizontal 1 cm × thickness 0.01 cm) at the parts where the active material layers were not formed by ultrasonic welding to thereby obtain a negative electrode and positive electrode with tabs. Further, the obtained negative electrode and positive electrode with tabs were vacuum dried at 200°C for 24 hours were sandwiched between separators constituted by thickness 20 $\mu$m polypropylene separators "Celgard 2400" (made by Celgard) cut out to vertical 5.3 cm × horizontal 5.3 cm and in that state arranged and laminated in the same direction so that the terminal welding parts of the positive electrode current collector and negative electrode current collector did not overlap and thereby obtain an electrode laminate.

Further, the obtained electrode laminate was placed inside deep drawn external laminate films, three sides were heat bonded, then an electrolytic solution (solvent: ethylene carbonate/ethylmethyl carbonate = 3/7 (weight ratio), electrolyte: 1M $LiPF_6$ (made by Kishida Chemical)) was filled and made to impregnate the laminate in vacuum, then the remaining side was heat bonded under reduced pressure to seal the assembly and obtain a lithium ion secondary cell.

(Example 2)

Except for, when using the composite particles for negative electrode and the copper foil on which the aconductive adhesion layer were formed to produce a negative electrode, changing the roll pressure (linear pressure) of the rolls 6A and 6B which form the pre-forming rolls 6 of the electrode forming apparatus 2 shown in FIG. 5 to 20 kN/m and changing the roll pressure (linear pressure) of the rolls 8A and 8B which form the forming rolls 8 to 250 kN/m, the same procedure was followed as in Example 1 to obtain a negative electrode and use the obtained negative electrode to produce a lithium ion secondary cell and similarly evaluate these. The results are shown in Table 1.

(Example 3)

Except for, when using the composite particles for negative electrode and the copper foil on which the aconductive adhesion layer were formed to produce a negative electrode, changing the roll pressure (linear pressure) of the rolls 6A and 6B which form the pre-forming rolls 6 of the electrode forming apparatus 2 shown in FIG. 5 to 3 kN/m and changing the roll pressure (linear pressure) of the rolls 8A and 8B which form the forming rolls 8 to 750 kN/m, the same procedure was followed as in Example 1 to obtain a negative electrode and use the obtained negative electrode to produce a lithium ion secondary cell and similarly evaluate these. The results are shown in Table 1.

(Example 4)

Except for using, when using the slurry for negative electrode and slurry for positive electrode to perform spray drying granulation by a spray dryer, instead of the rotary disk type atomizer constituted by a vane type atomizer, a pin type atomizer (rotational speed 25,000 rpm), the same procedure was followed as in Example 1 to obtain a negative electrode and positive electrode and use the obtained negative electrode and positive electrode to produce a lithium ion secondary cell and similarly evaluate these. The results are shown in Table 1.

(Example 5)

Except for using, when using the slurry for negative electrode and slurry for positive electrode to perform spray drying granulation by a spray dryer, instead of the rotary disk type atomizer constituted by a vane type atomizer, a pressurized two-fluid nozzle system (pressurizing pressure 0.3 MPa), the same procedure was followed as in Example 1 to obtain a negative electrode and positive electrode and use the obtained negative electrode and positive electrode to produce a lithium ion secondary cell and similarly evaluate these. The results are shown in Table 1.

(Example 6)

Except for using, when obtaining the composite particles for negative electrode, instead of the styrene-butadiene copolymer (BM-480B), a styrene-butadiene copolymer with a different glass transition temperature (BM-430B, glass transition temperature -37°C; made by Zeon Corporation), the same procedure was followed as in Example 1 to obtain a negative electrode and use the obtained negative electrode to produce a lithium ion secondary cell and similarly evaluate these. The results are shown in Table 1.

(Example 7)

Except for using, when obtaining the composite particles for negative electrode, instead of the styrene-butadiene copolymer (BM-480B), an acrylate polymer (butyl acrylate:methyl methacrylate:itaconic acid=80:15:5 (mass ratio), glass transition temperature -28°C, number average particle size 0.3 $\mu$m), the same procedure was followed as in Example 1 to obtain a negative electrode and use the obtained negative electrode to produce a lithium ion secondary cell and similarly evaluate these. The results are shown in Table 1.

(Example 8)

Except for, first, not adding the negative electrode active material constituted by graphite when obtaining the composite particles for negative electrode, the same procedure was followed as in Example 1 to obtain a slurry for negative electrode. Next, the obtained slurry for negative electrode and the negative electrode active material constituted by graphite were used for drying granulation using a fluidized bed dryer (Agromaster "AGM-PJ", made by Hosokawa Micron) instead of a spray dryer to obtain composite particles for negative electrode. Note that, the drying temperature at this time was made 80°C. Further, except for not using the obtained composite particles for negative electrode, the same procedure was followed as in Example 1 to obtain a negative electrode and use the obtained negative electrode to produce a lithium ion secondary cell and similarly evaluate these. The results are shown in Table 1.

(Example 9)

Except for, first, not adding the negative electrode active material constituted by graphite when obtaining the composite particles for negative electrode, the same procedure was followed as in Example 1 to obtain a slurry for negative electrode. Next, the obtained slurry for negative electrode and negative electrode active material constituted by graphite were used for dry granulation by a tumble stirring fluidized bed granulation apparatus (New Gra Machine "SEG-200", made by Seishin Enterprise) instead of a spray dryer to obtain composite particles for negative electrode. Note that, the drying temperature at this time was made 25°C. Further, except for using the obtained composite particles for negative electrode, the same procedure was followed as in Example 1 to obtain a negative electrode and use the obtained negative electrode to produce a lithium ion secondary cell and similarly evaluate these. The results are shown in Table 1.

(Example 10)

Except for not forming an conductive adhesion layer on a negative electrode current collector constituted by copper foil, the same procedure was followed as in Example 1 to obtain a negative electrode and use the obtained negative electrode to produce a lithium ion secondary cell and similarly evaluate these. The results are shown in Table 1.

(Comparative Example 1)

<Production of Negative Electrode>

To a planetary mixer equipped with a disperser "T.K. Hivis Disper Mix" (made by Primix), a negative electrode active material constituted by graphite 100 parts, a binder constituted by a styrene-butadiene copolymer (BM-480B; made by Zeon Corporation) in a 40% aqueous dispersion 2 parts equivalent in solid content, a dispersant constituted by a sodium salt of carboxymethyl cellulose in a 1.0% aqueous solution (BSH-12; made by Dai-ichi Kogyo Seiyaku) 0.7 part equivalent in solid content, and a solvent constituted by water 30 parts were added and mixed while stirring. The mixture was defoamed under reduced pressure to obtain a solid content concentration 50% good fluidity slurry for negative electrode.
Further, the above obtained slurry for negative electrode was coated using a comma coater on a thickness 20 $\mu$m copper foil by a rate of 5 m/min to give a dried thickness of 95 $\mu$m or so, was dried at 60°C for 2 minutes, was heat treated at 120°C for 2 minutes, then was compressed by a pair of rolls at 200 kN/m pressure (linear pressure) to obtain a negative electrode. Further, the obtained negative electrode was used for evaluation in the same way as Example 1. The results are shown in Table 1.

<Production of Positive Electrode>

To a planetary mixer equipped with a disperser "T.K. Hivis Disper Mix" (made by Primix), a positive electrode active material constituted by LiCoO$_2$, 100 parts, a binder constituted by an acrylate polymer (butyl acrylate:methyl methacrylate:itaconic acid = 80:15:5 (mass ratio), glass transition temperature -28°C, number average particle size 0.3 $\mu$m) in a 40% aqueous dispersion 1 part equivalent in solid content, a conductive material constituted by an average particle size 0.7 $\mu$m acetylene black (Denka Black Powder, made by Denki Kagaku Kogyo) 5 parts, a dispersant constituted by a sodium salt of carboxymethyl cellulose in a 2.0% aqueous solution (BS-H; made by Dai-ichi Kogyo Seiyaku) 0.8 part equivalent in solid content, and a solvent constituted by water 5.0 parts were added and mixed while stirring. The mixture was defoamed under reduced pressure to obtain a solid content concentration 70% good fluidity slurry for positive electrode.
Further, the above obtained slurry for positive electrode was coated using a comma coater on a thickness 20 $\mu$m aluminum foil by a rate of 5 m/min to give a dried thickness of 100 $\mu$m or so, was dried at 60°C for 2 minutes, was heat treated at 120°C for 2 minutes, then was compressed by a pair of rolls at 200 kN/m pressure (linear pressure) to obtain a positive electrode.

<Production of Lithium Ion Secondary Cell>

Further, the above obtained negative electrode and positive electrode were used in the same way as in Example 1 to obtain a lithium ion secondary cell and to evaluate it in the same way as Example 1. The results are shown in Table 1.

(Comparative Example 2)

<Production of Negative Electrode>

Except for making both the rolls 6A and 6B which form the pre-forming rolls 6 and the rolls 8A and 8B which form the forming rolls 8 of the electrode forming apparatus 2 shown in FIG. 5 ones with roll diameters of 250 mm, a roll gap of 50 $\mu$m, and a roll pressures (linear pressure) of 200 kN/m, the same procedure was followed as in Example 4 to obtain a negative electrode. The results are shown in Table 1.

<Production of Positive Electrode>

Except for making both the rolls 6A and 6B which form the pre-forming rolls 6 and the rolls 8A and 8B which form the forming rolls 8 of the electrode forming apparatus 2 shown in FIG. 5 ones with roll diameters of 250 mm, a roll gap of 50 $\mu$m, and a roll pressure (linear pressure) of 250 kN/m, the same procedure was followed as in Example 4 to obtain a positive electrode.

<Production of Lithium Ion Secondary Cell>

Further, the above obtained negative electrode and positive electrode were used in the same way as in Example 1 to obtain a lithium ion secondary cell and to evaluate it in the same way as Example 1. The results are shown in Table 1.
Table 1

Table 1

| | | | Example | | | | | | | | | | Comp. ex. | |
|---|---|---|---|---|---|---|---|---|---|---|---|---|---|---|
| | | | 1 | 2 | 3 | 4 | 5 | 6 | 7 | 8 | 9 | 10 | 1 | 2 |
| Production conditions of negative electrode | | | | | | | | | | | | | | |
| | Binder | | Styrene-butadiene copolymer (BM-480B) | Styrene-butadiene copolymer (BM-480B) | Styrene-butadiene copolymer (BM-480B) | Styrene-butadiene copolymer (BM-480B) | Styrene-butadiene copolymer (BM-480B) | Styrene-butadiene copolymer (BM-480B) | Acrylic polymer | Styrene-butadiene copolymer (BM-480B) | Styrene-butadiene copolymer (BM-480B) | Styrene-butadiene copolymer (BM-480B) | Styrene-butadiene copolymer (BM-480B) | Styrene-butadiene copolymer (BM-480B) |
| | Granulation method | | Spray drying (vane type atomizer) | Spray drying (vane type atomizer) | Spray drying (vane type atomizer) | Spray drying (pin type atomizer) | Spray drying (2-fluid nozzle type) | Spray drying (vane type atomizer) | Spray drying (vane type atomizer) | Fluid layer granulation | Tumble stirring, fluidized bed granulation | Spray drying (vane type atomizer) | Electrode formed by coating | Spray drying (pin type atomizer) |
| | Pre-forming roll pressure | (kN/m) | 15 | 20 | 3 | 15 | 15 | 15 | 15 | 15 | 15 | 15 | | 200 |
| | Main forming roll pressure | (kN/m) | 350 | 250 | 750 | 350 | 350 | 350 | 350 | 350 | 350 | 350 | 200 | 200 |
| | Conductive adhesion layer | | Yes | Yes | Yes | Yes | Yes | Yes | Yes | Yes | Yes | No | Yes | Yes |
| Bulk density of composite particles for negative electrode | | (g/cm$^3$) | 0,40 | 0,40 | 0,40 | 0,43 | 0,35 | 0,42 | 0,37 | 0,30 | 0,33 | 0,40 | - | 0,43 |
| Density after pre-forming | | (g/cm$^3$) | 0,80 | 1,00 | 0,60 | 0,86 | 0,70 | 0,84 | 0,74 | 0,60 | 0,66 | 0,80 | 1,40 | 1,40 |
| Final density of negative electrode active material layer after main pressing | | (g/cm$^3$) | 1,50 | 1,50 | 1,50 | 1,50 | 1,50 | 1,50 | 1,50 | 1,50 | 1,50 | 1,50 | 1,50 | 1,50 |
| Ratio of density after pre-forming to bulk density | | (%) | 200 | 250 | 150 | 200 | 200 | 200 | 200 | 200 | 200 | 200 | - | 350 |
| Evaluation | | | | | | | | | | | | | | |
| | Microstrudure of electrode | | A | A | A | A | A | A | A | A | A | A | E | E |

(continued)

| Evaluation | | | | | | | | | | | |
|---|---|---|---|---|---|---|---|---|---|---|---|
| Peel strength | A | A | B | A | B | A | C | C | C | B | B | C |
| Electrolytic solution wettability | A | B | A | B | B | B | A | B | C | A | E | D |
| Interval resistance | A | A | A | A | B | B | A | C | C | B | D | E |
| Charging/discharging cycle characteristics | A | A | B | B | B | B | C | B | C | A | D | D |

29

As shown in Table 1, in Examples 1 to 10, when producing an electrode, when obtaining the composite particles for electrode and forming the obtained composite particles for electrode, first, they are pre-formed to obtain a sheet-shaped pre-formed member 14, then they are formed by a main forming operation by a pressure higher than the pressure at the time of pre-forming to thereby apply a shear force to the sheet-shaped pre-formed member 14 while compressing it. In Examples 1 to 10, the microstructure of the electrode active material layer of the obtained electrode in each case, as shown in FIG. 2, was a structure in which the binder-covered parts 220 which cover the mutually adjoining pluralities of particles of the electrode active material 210 are connected by the binder-connecting parts 230. Further, the electrodes which were obtained in these Examples 1 to 10 were all high in peel strength, excellent in wettability with respect to the electrolytic solution, and, when made into cells, gave low internal resistance and an excellent charging/discharging cycle characteristics. In particular, this tendency is the same in each of the cases of the case of changing the pressure at the time of pre-forming and the pressure at the time of main forming (Examples 2 and 3), the case of changing the granulation conditions (Examples 4, 5, 8, and 9), the case of changing the binder (Examples 6 and 7), and the case of changing the presence of an conductive adhesion layrer (Examples 1 and 10). Further, in the present example, the evaluation of the case of using a negative electrode was illustrated, but a similar trend is exhibited in the case of a positive electrode as well.

On the other hand, in Comparative Example 1 where the electrode is formed by the coating method and Comparative Example 2 where the pressure at the time of pre-forming and the pressure at the time of main forming are the same, the microstructure of the electrode active material layer of the obtained electrode, as shown in FIG. 3 and FIG. 4, was a structure in which the spaces which were formed by the mutually adjoining pluralities of particles of the electrode active material 210 were completely enclosed by the binder 220a. Further, the electrodes which were obtained in these Comparative Examples 1 and 2 were low in wettability to the electrolytic solution and were inferior in internal resistance and charging/discharging cycle characteristics when made into a cell.

(Example 11)

Next, an example according to the above-mentioned second example will be explained as Example 11.

Specific surface area 1,700 $m^2$/g activated carbon obtained by steam activation 100 parts, acetylene black 7.5 parts, carboxymethyl cellulose sodium salt 1.4 parts, and a latex of diene-based polymer (glass transition temperature: -19°C) 10 parts in equivalent of solid content were mixed, ion exchanged water was further added to give a solid content concentration of 20%, and the result was mixed and dispersed to obtain a composition for composite particle. This composition for composite particle was granulated by spray drying using a spray dryer at a speed of the rotary disk type atomizer (diameter 65 mm) of 16,000 rpm, hot air temperature of 150°C, and particle recovery outlet temperature of 85°C to obtain spherical composite particles. The spherical composite particles have a sphericality of 0.12 and an average volume particle diameter of 102 $\mu$m.

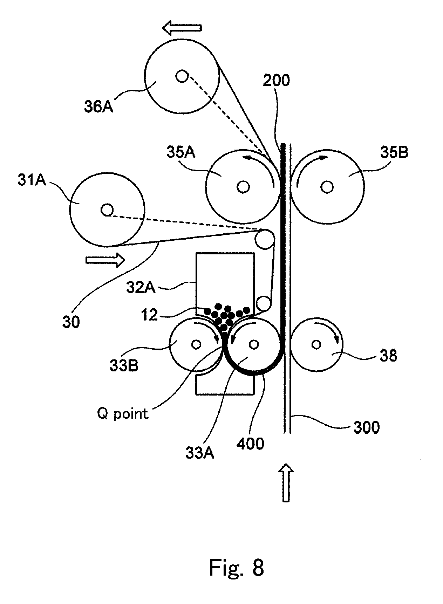

The spherical composite particles which are obtained here, a long sheet-shaped support (PET film (thickness 50 $\mu$m, tensile strength 200 MPa) roughened to give surface roughness Ra of 0.4 $\mu$m by sandblasting), and a long sheet-shaped current collector (thickness 30 $\mu$m aluminum current collector coated with 4 $\mu$m adhesive material) are used and the apparatus shown in FIG. 8 (roll circumferential speed 10 m/min, gap between roll 33B and roll 33A 100 $\mu$m, roll 33B temperature 25°C, roll 33A temperature 25°C, roll 33B and roll 33A linear pressure 0.1 kN/cm, gap between roll 33A and roll 38 100 $\mu$m, roll 38 temperature 25°C, roll 33A and roll 38 linear pressure 0.1 kN/cm, gap between roll 35A and roll 38 150 $\mu$m, roll 35A temperature 100°C, roll 35B temperature 100°C, roll 35A and roll 35B linear pressure 1 kN/cm) is used to obtain a thickness 193 $\mu$m electrode for electrochemical device on one surface of the current collector. The electrode active material layer of the obtained electrode has a precision of thickness of the entire surface of within 4%.

The composite particles for electrode 12 which are comprised of the spherical composite particles has a loose bulk density of is 0.18g/cc, and the compressed powder layer 400 has a density of 0.4 g/cc. The compressed powder layer 400 has a thickness of 220 $\mu$m.

(Example 12)

Next, an example according to the above-mentioned fourth example will be explained as Example 12.

Specific surface area 1,700 $m^2$/g activated carbon obtained by steam activation 100 parts, acetylene black 7.5 parts, carboxymethyl cellulose sodium salt 1.4 parts, and a latex of diene-based polymer (glass transition temperature: -19°C) 10 parts in equivalent of solid content were mixed, ion exchanged water was further added to give a solid content concentration of 20%, and the result was mixed and dispersed to obtain a composition for composite particle. This composition for composite particle was granulated by spray drying using a spray dryer at a speed of the rotary disk type atomizer (diameter 65 mm) of 16,000 rpm, hot air temperature of 150°C, and particle recovery outlet temperature of 85°C to obtain spherical composite particles. The spherical composite particles have a sphericality of 0.12 and an average volume particle diameter of 102 $\mu$m.

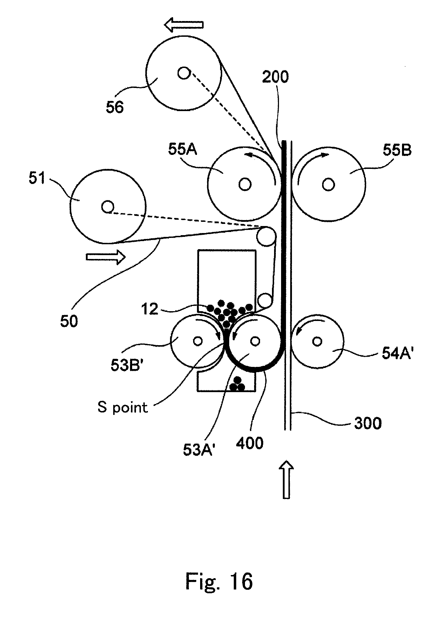

The spherical composite particles which are obtained here, a discontinuously sandblasted long support sheet 50 (PET film (thickness 50 $\mu$m, tensile strength 200 MPa) roughened to give surface roughness Ra of 0.4 $\mu$m by sandblasting), and a long sheet-shaped current collector 300 (thickness 30 $\mu$m aluminum current collector coated with adhesive material) are used and the apparatus shown in FIG. 16 (roll circumferential speed 10 m/min, gap between roll 53B' and roll 53A' 100 $\mu$m, roll 53B' temperature 25°C, roll 53A' temperature 25°C, roll 53B' and roll 53A' linear pressure 0.1 kN/cm, gap between roll 53A' and roll 54A' 100 $\mu$m, roll 54A' temperature 25°C, roll 53A' and roll 54A' linear pressure 0.1 kN/cm, gap between roll 55A and roll 55B 150 $\mu$m, roll 55A temperature 100°C, roll 55B temperature 100°C, roll 55A and roll 55B linear pressure 1 kN/cm) is used to obtain a discontinuously formed average thickness 193 $\mu$m electrode for electrochemical device on one surface of the current collector 300 corresponding to the roughened part of the support sheet 50. The electrode active material layer 200 of the obtained electrode has a precision of thickness of the entire surface of within 4%. Note that, in the apparatus shown in FIG. 16, the support sheet 50 is supplied from the rolled member 51 of the support sheet 50 and is taken up by the roll 56.

The composite particles for electrode 12 which are comprised of the spherical composite particles have a loose bulk density of 0.18 g/cc, while the compressed powder layer 400 has a density of 0.4 g/cc. The compressed powder layer 400 has a thickness of 220 $\mu$m.

REFERENCE SIGNS LIST

| | |
|---|---|
| 100 | electrode for electrochemical device |
| 200 | electrode active material layer |
| 210 | electrode active material |
| 220 | binder-covered part |
| 230 | binder-connecting part |
| 240 | space part |
| 300 | current collector |

**Claims**

1.  An electrode for electrochemical device which is provided with an electrode active material layer containing an electrode active material and a binder, comprising
    binder-covered parts comprised of a binder which covers at least parts of the surfaces of particles of an electrode active material and
    binder-connecting parts comprised of a binder which is present in space parts formed between pluralities of particles of the electrode active material and which connects the binder-covered parts formed at the surfaces of the pluralities of particles of the electrode active material which form the space parts.

2.  The electrode for electrochemical device as set forth in claim 1, wherein the binder-covered parts which are formed at the surfaces of pluralities of particles of the electrode active material which form the space parts are not formed integrally but are formed independent from each other.

3.  The electrode for electrochemical device as set forth in claim 1 or 2, wherein the binder-connecting parts have lengths of 0.01 to 5 $\mu$m.

4.  The electrode for electrochemical device as set forth in any one of claims 1 to 3, wherein the binder-connecting parts have fibrous and/or sheet shapes.

5.  The electrode for electrochemical device as set forth in any one of claims 1 to 4, wherein the binder is an acrylate-based polymer and/or conjugated diene-based polymer.

6.  The electrode for electrochemical device as set forth in any one of claims 1 to 5, wherein the electrode active material and the binder form composite particles.

7.  The electrode for electrochemical device as set forth in any one of claims 1 to 6, wherein the electrode active material layer is obtained by pressing the composite particles by a first pressure to obtain a pressed member and pressing the pressed member by a second pressure which is higher than the first pressure.

100

200

300

Fig. 1

Fig. 2

210

210

210

220a          210

Fig. 3

210
210
210
220a 210 240a

Fig. 4

Fig. 5

Fig. 6

Fig. 7

Fig. 8

Fig. 9

surface treated part

43A

43B

Fig. 10

Fig. 11

Fig. 12

Fig. 13

Fig. 14

Fig. 15

Fig. 16

## INTERNATIONAL SEARCH REPORT

| International application No. |
|---|
| PCT/JP2012/073419 |

**A. CLASSIFICATION OF SUBJECT MATTER**
*H01M4/62*(2006.01)i, *H01M4/04*(2006.01)i, *H01M4/139*(2010.01)i, *H01G9/00*
(2006.01)n, *H01G11/22*(2013.01)n, *H01G13/00*(2013.01)n

According to International Patent Classification (IPC) or to both national classification and IPC

**B. FIELDS SEARCHED**

Minimum documentation searched (classification system followed by classification symbols)
H01M4/62, H01M4/04, H01M4/139, H01G9/00, H01G9/058, H01G13/00

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2003-217594 A (Nissan Motor Co., Ltd.),<br>31 July 2003 (31.07.2003),<br>claim 1; examples; fig. 2<br>(Family: none) | 1,6<br>5 |
| X<br>Y | JP 2003-208894 A (Samsung SDI Co., Ltd.),<br>25 July 2003 (25.07.2003),<br>claims 1, 2; paragraphs [0015], [0029];<br>examples; fig. 2<br>& US 2003/0113627 A1 & KR 10-2003-0050475 A<br>& CN 1427491 A | 1,6<br>5 |
| Y<br>A | JP 3627586 B2 (Nippon Zeon Co., Ltd.),<br>09 March 2005 (09.03.2005),<br>claim 1; examples<br>& US 6881517 B1 & EP 1249882 A1<br>& WO 2001/018892 A1 | 5<br>1-4,6,7 |

☐ Further documents are listed in the continuation of Box C. ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 13 December, 2012 (13.12.12) | 25 December, 2012 (25.12.12) |

| Name and mailing address of the ISA/<br>Japanese Patent Office | Authorized officer |
|---|---|
| Facsimile No. | Telephone No. |

Form PCT/ISA/210 (second sheet) (July 2009)

**EP 2 757 620 A1**

**Patent documents cited in the description**

- JP 3627586 B